(19) Europäisches Patentamt
European Patent Office
Office européen des brevets

(11) **EP 4 203 090 A1**

(12) **EUROPEAN PATENT APPLICATION**
published in accordance with Art. 153(4) EPC

(43) Date of publication:
**28.06.2023 Bulletin 2023/26**

(21) Application number: **21857987.8**

(22) Date of filing: **21.04.2021**

(51) International Patent Classification (IPC):
*H01M 4/13* (2010.01)          *H01M 4/62* (2006.01)
*H01M 10/0562* (2010.01)      *H01M 10/058* (2010.01)
*H01M 50/463* (2021.01)

(52) Cooperative Patent Classification (CPC):
**H01M 4/13; H01M 4/62; H01M 10/052;**
**H01M 10/0562; H01M 10/058; H01M 50/463;**
Y02E 60/10; Y02P 70/50

(86) International application number:
**PCT/JP2021/016226**

(87) International publication number:
**WO 2022/038835 (24.02.2022 Gazette 2022/08)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **18.08.2020 PCT/JP2020/031096**

(71) Applicant: **TERAWATT TECHNOLOGY K.K.**
**Yokohama-shi, Kanagawa 226-0026 (JP)**

(72) Inventors:
• **NAKANO, Masatsugu**
  **Yokohama-shi, Kanagawa 226-0026 (JP)**
• **OGATA, Ken**
  **Yokohama-shi, Kanagawa 226-0026 (JP)**
• **IMOTO, Hiroshi**
  **Yokohama-shi, Kanagawa 226-0026 (JP)**

(74) Representative: **Mewburn Ellis LLP**
**Aurora Building**
**Counterslip**
**Bristol BS1 6BX (GB)**

(54) **LITHIUM SECONDARY BATTERY**

(57)     The purpose of the present invention is to provide a lithium secondary battery having a high energy density and an excellent cycle characteristic. The present invention relates to a lithium secondary battery equipped with a positive electrode, a negative electrode not having a negative electrode active material, a separator placed therebetween, and a fibrous or porous buffering function layer formed on the surface of the separator facing the negative electrode and having ionic conductivity. The positive electrode contains a positive electrode active material and a lithium-containing compound which causes an oxidation reaction and does not substantially cause a reduction reaction in a charge/discharge potential range of the positive electrode active material. In a particle size distribution by the laser·diffraction method, the lithium-containing compound has a particle size $D_{50}$ (S), which corresponds to a cumulative degree at 50%, of 1.0 $\mu$m or more and 20 $\mu$m or less and a particle size $D_{95}$ (S), which corresponds to a cumulative degree at 95%, of 1.0 $\mu$m or more and 30 $\mu$m or less.

[Fig 1]

## Description

**Technical Field**

The present invention relates to a lithium secondary battery.

**Background Art**

The technology of converting natural energy such as solar light and window power into electric energy has recently attracted attentions. Under such a situation, various secondary batteries have been developed as a highly-safe power storage device capable of storing a lot of electric energy.

Among them, secondary batteries which perform charge/discharge by transferring metal ions between a positive electrode and a negative electrode are known to exhibit a high voltage and a high energy density. Typically, lithium-ion secondary batteries are known. Examples of the typical lithium-ion secondary batteries include those which have a positive electrode and a negative electrode having, introduced thereon, an active material capable of retaining lithium and perform charge/discharge by delivering or receiving lithium ions between the positive electrode active material and the negative electrode active material. In addition, as a secondary battery having a negative electrode for which no active material is used, there has been developed a lithium-metal secondary battery which precipitates a lithium metal on the surface of a negative electrode and thereby retaining lithium thereon.

For example, Patent Document 1 discloses a high-energy-density and high-output lithium-metal anode secondary battery having a volume energy density exceeding 1000 Wh/L and/or a mass energy density exceeding 350 Wh/kg at the time of discharge at at least a rate of 1C at room temperature. Patent Document 1 discloses the use of an ultrathin lithium-metal anode for manufacturing such a lithium-metal anode secondary battery.

Patent Document 2 discloses a lithium secondary battery including a positive electrode and a negative electrode, and a separation membrane and an electrolyte interposed therebetween. In the aforesaid negative electrode, metal particles formed on a negative electrode current collector are transferred from the positive electrode when the battery is charged and a lithium metal is formed on the negative electrode current collector in the negative electrode. Patent Document 2 discloses that such a lithium secondary battery shows the possibility of providing a lithium secondary battery which has overcome the problem due to the reactivity of the lithium metal and the problem caused during assembly and therefore has improved performance and service life.

Citation List

Patent Documents

Patent Document 1: Published Japanese Translation of PCT application No 2019-517722
Patent Document 2: Published Japanese Translation of PCT application No 2019-537226

**Summary**

Technical Problem

As a result of detailed investigation of conventional batteries including those described in the above patent documents, the present inventors have found that at least any one of their energy density, cycle characteristic, and rate characteristic is not sufficient.

For example, a typical secondary battery which carries out charge/discharge by delivering or receiving metal ions between a positive electrode active material and a negative electrode active material does not have a sufficient energy density. A conventional lithium-metal secondary battery which precipitates a lithium metal on the surface of a negative electrode and thereby retains lithium thereon, as described in the aforesaid patent document, is likely to form a dendritelike lithium metal on the surface of the negative electrode after repetition of charge/discharge and cause a short circuit and capacity reduction. This results in an insufficient cycle characteristic. In addition, when a lithium metal secondary battery as described above is charged/discharged in repetition, it tends to have an increased internal resistance so that it also has a deteriorated rate characteristic.

Further, in a lithium-metal secondary battery, a method of applying a large physical pressure on a battery to keep the interface between a negative electrode and a separator at high pressure has also been developed in order to suppress the discrete growth at the time of lithium metal precipitation. Application of such a high pressure however needs a large mechanical mechanism, leading to an increase in the weight and volume of the battery and a reduction in energy density as the entire battery.

The present invention has been made in consideration of the aforesaid problems and a purpose is to provide a lithium secondary battery having a high energy density and excellent in cycle characteristic or rate characteristic.

Solution to Problem

The lithium secondary battery according to one embodiment of the present invention has a positive electrode, a negative electrode not having a negative electrode active material, a separator placed between the positive electrode and the negative electrode, and a fibrous or porous buffering function layer formed on the surface of the separator facing the negative electrode and having ionic conductivity. The positive electrode contains a positive electrode active material and a lithium-containing compound which causes an oxidation reaction and at the same time, does not substantially cause a reduction reaction in a charge/discharge potential range of the positive electrode active material. In a particle size distribution as determined by the laser diffraction·scattering method, a particle size $D_{50}$ (S), which corresponds to a cumulative degree at 50%, of the lithium-containing compound is 1.0 $\mu$m or more and 20 $\mu$m or less and a particle size $D_{95}$ (S), which corresponds to a cumulative degree at 95%, of the lithium-containing compound is 1.0 $\mu$m or more to 30 $\mu$m or less.

Such a lithium secondary battery equipped with a negative electrode not having a negative electrode active material has a high energy density because a lithium metal precipitates on the surface of the negative electrode and charge/discharge is performed by the electrolysis and elution of the resulting precipitated lithium metal.

The buffering function layer of the lithium secondary battery according to the one embodiment of the present invention is presumed to function, in the lithium secondary battery, as a buffering layer for relaxing and suppressing a volume expansion of the battery caused by charge/discharge.

Further, the aforesaid lithium secondary battery has a lithium-containing compound as described above as a sacrificial positive electrode agent in the positive electrode. A sacrificial positive electrode agent as described above causes an oxidation reaction (this means, causes emission of a lithium ion) at the initial charge time of the lithium secondary battery but does not substantially cause a reduction reaction (this means that a lithium-containing compound before discharge is not formed) at the time of subsequent discharge and a lithium element derived from the lithium-containing compound remains as a lithium metal on the surface of the negative electrode. The aforesaid sacrificial positive electrode agent has, in the particle size distribution as determined by the laser diffraction·scattering method, a particle size $D_{50}$ (S), which corresponds to a cumulative degree at 50%, of 1.0 $\mu$m or more and 20 $\mu$m or less and a particle size $D_{95}$ (S), which corresponds to a cumulative degree at 95%, of 1.0 $\mu$m or more and 30 $\mu$m or less. The sacrificial positive electrode agent having such a particle size can make a lithium metal which precipitates on the surface of the negative electrode more uniform while keeping its interfacial resistance low.

In the aforesaid lithium secondary battery, it is presumed that all the lithium metals which have precipitated uniformly on the surface of the negative electrode do not dissolve during discharge and even after completion of the discharge, some of the lithium metals remain on the surface of the negative electrode. The residual lithium metals become a scaffold for the precipitation of a new lithium metal on the surface of the negative electrode at the time of subsequent charge and therefore, lithium metals are likely to precipitate more uniformly on the surface of the negative electrode at the time of the charge. The growth of a lithium metal into dendrite form on the negative electrode is therefore suppressed and the resulting lithium secondary battery has an excellent cycle characteristic.

A lithium secondary battery according to another embodiment of the present invention is equipped with a positive electrode, a negative electrode not having a negative electrode active material, a separator placed between the positive electrode and the negative electrode, and a fibrous or porous buffering function layer formed on the surface of the separator facing the negative electrode and having ionic conductivity. The positive electrode contains a positive electrode active material and a lithium-containing compound which causes an oxidation reaction and does not substantially cause a reduction reaction in a charge/discharge potential range of the positive electrode active material. In the particle size distribution as determined by the laser diffraction·scattering method, supposing that a particle size corresponding to a cumulative degree at 50% is $D_{50}$, $D_{50}$ (A) of the positive electrode active material is 5.0 $\mu$m or more and 20 $\mu$m or less and a particle size ratio of $D_{50}$ (A) of the positive electrode active material to $D_{50}$ (S) of the lithium-containing compound, that is, $D_{50}$ (A)/$D_{50}$ (S) is 2.0 or more and 10.0 or less.

Such a lithium secondary battery is equipped with a negative electrode not having a negative electrode active material, a buffering function layer, and a lithium-containing compound as a sacrificial positive electrode agent so that it has a high energy density and an excellent cycle characteristic because of reasons similar to those described above.

The lithium-containing compound used as a sacrificial positive electrode agent has electric conductivity lower than that of the positive electrode active material and when the sacrificial positive electrode agent is added to a positive electrode, the entire positive electrode tends to have a high internal resistance. On the other hand, in the aforesaid lithium secondary battery, $D_{50}$ (A) of the positive electrode active material is 5.0 $\mu$m or more and 20 $\mu$m or less and a

particle size ratio $D_{50}$ (A)/$D_{50}$ (S) of $D_{50}$ (A) of the positive electrode active material to $D_{50}$ (S) of the lithium-containing compound is 2.0 or more and 10.0 or less in the particle size distribution as determined by the laser diffraction·scattering method. Inhibition of the contact between positive electrode active materials by the sacrificial positive electrode agent is suppressed and the positive electrode has high electric conductivity therein. The aforesaid lithium secondary battery has sufficiently small internal resistance in its positive electrode and therefore has an excellent rate characteristic.

In the lithium secondary battery in which the positive electrode active material has $D_{50}$ (A) of 5.0 $\mu$m or more and 20 $\mu$m or less and a particle size ratio $D_{50}$ (A)/$D_{50}$ (S) of 2.0 or more and 10.0 or less, $D_{50}$ (S) of the lithium-containing compound is preferably 1.0 $\mu$m or more and 10 $\mu$m or less. In such a mode, a lithium metal which precipitates on the surface of the negative electrode becomes more uniform and precipitation of a dendrite lithium metal on the negative electrode can be suppressed so that the resulting battery has a more excellent cycle characteristic.

In the lithium secondary battery in which $D_{50}$ (A) of the positive electrode active material is 5.0 $\mu$m or more and 20 $\mu$m or less and a particle size ratio $D_{50}$ (A)/$D_{50}$ (S) is 2.0 or more and 10.0 or less, the electrode density of the positive electrode is preferably 3.0 g/cc or more. According to such a mode, a lithium secondary battery having a higher capacity can be obtained.

The aforesaid lithium secondary battery contains the aforesaid sacrificial positive electrode agent in an amount of 1.0 mass% or more and 15 mass% or less based on the total mass of the aforesaid positive electrode. Such a mode makes it possible to provide a lithium secondary battery having a more excellent cycle characteristic, because the effect of the aforesaid sacrificial positive electrode agent is exhibited more effectively and reliably.

The proportion of the irreversible capacity of the aforesaid lithium-containing compound in the cell capacity of the lithium secondary battery is preferably 1.0% or more and 30% or less. In such a mode, the amount of the lithium which has remained on the surface of the negative electrode after completion of the discharge becomes more appropriate so that the resulting lithium secondary battery has more improved cycle characteristic and energy density.

The porosity of the buffering function layer is preferably 50% or more. In such a mode, the aforesaid buffering function layer displays its effect more effectively and reliably so that the resulting lithium secondary battery has more improved cycle characteristic and energy density.

The buffering function layer preferably has electric conductivity. When a lithium secondary battery has a buffering function layer further having electric conductivity on the surface of the separator, a lithium metal can precipitate not only on the surface of the negative electrode but also on the inside of a fibrous or porous buffering function layer having both ionic conductivity and electric conductivity. This increases the surface area of a reaction site of a lithium metal precipitation reaction and suppresses the reaction rate of the lithium metal precipitation reaction mildly. As a result, the growth of a lithium metal into dendrite form on the negative electrode is suppressed further and the resulting battery tends to have a more improved cycle characteristic.

The aforesaid sacrificial positive electrode agent is preferably an Fe-containing compound. In such a mode, the effect of the aforesaid sacrificial positive electrode agent is displayed more effectively and reliably and the lithium secondary battery thus obtained has a more excellent cycle characteristic.

Advantageous Effects of Invention

The present invention makes it possible to provide a lithium secondary battery having a high energy density and an excellent cycle characteristic or rate characteristic.

**Brief Description of Drawings**

Fig. 1 is a schematic cross-sectional view of a lithium secondary battery according to First Embodiment.
Fig. 2 is a schematic cross-sectional view of the use of the lithium secondary battery according to First Embodiment.
Fig. 3 is a schematic cross-sectional view of a buffering function layer in the lithium secondary battery according to First Embodiment, in which (A) shows a fibrous buffering function layer which is one embodiment of the buffering function layer, and (B) shows a precipitation mode of a lithium metal on the fibrous buffering function layer.
Fig. 4 is a schematic cross-sectional view of a buffering function layer in the lithium secondary battery according to First and Second Embodiments and shows one embodiment of a member constituting the fibrous buffering function layer.

**Description of Embodiments**

The embodiment of the present invention (which will hereinafter be called "present embodiment") will hereinafter be described in detail while referring to the drawings as needed. In the drawings, the same element will be represented by the same reference numeral and an overlapping description will be omitted. Unless otherwise specifically described, the positional relationship such as vertical or horizontal one will be based on the positional relationship shown in the drawings. Further, a dimensional ratio in the drawings is not limited to the ratio shown in the drawings.

[First Embodiment]

(Lithium secondary battery)

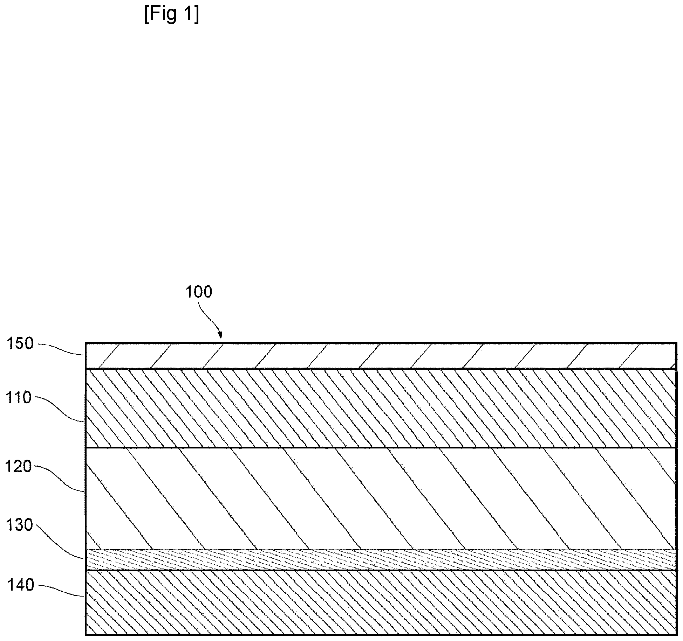

Fig. 1 is a schematic cross-sectional view of a lithium secondary battery of First Embodiment. As shown in Fig. 1, a lithium secondary battery 100 of First Embodiment is equipped with a positive electrode 110, a negative electrode 140 not having a negative electrode active material, a separator 120 placed between the positive electrode 110 and the negative electrode 140, and a buffering function layer 130 formed on the surface of the negative electrode 140 facing the separator 120. The positive electrode 110 has a positive electrode current collector 150 on the surface thereof opposite to the surface facing the separator 120.

(Negative electrode)

The negative electrode 140 does not have a negative electrode active material. The term "negative electrode active material" as used herein means a material causing an electrode reaction, that is, an oxidation reaction and a reduction reaction at a negative electrode. Specific examples of the negative electrode active material of the present embodiment include lithium metals and host materials of a lithium element (lithium ion or lithium metal). The term "host materials of a lithium element" means materials provided to retain a lithium ion or lithium metal on the negative electrode. Such a retaining mechanism is not particularly limited and examples of it include intercalation, alloying, and occlusion of metal clusters, typically intercalation.

In the lithium secondary battery of the present embodiment, since the negative electrode does not have a negative electrode active material before initial charge of the battery, charge/discharge is performed by the precipitation of a lithium metal on the negative electrode and electrolysis and elution of the thus-precipitated lithium metal. The lithium secondary battery of the present embodiment, compared with a lithium secondary battery having a negative electrode active material, has a high energy density in principle because the occupation volume of the negative electrode active material and the mass of the negative electrode active material are reduced and therefore, the volume and mass of the entire battery become smaller.

In the lithium secondary battery 100 of the present embodiment, the negative electrode 140 does not have a negative electrode active material before initial charge of the battery. A lithium metal precipitates on the negative electrode when the battery is charged and when it is discharged, electrolysis and elution of the precipitated lithium metal occurs. In the lithium secondary battery of the present embodiment, therefore, the negative electrode serves as a negative electrode current collector.

Comparison between the lithium secondary battery 100 of the present embodiment and a lithium ion battery (LIB) or a lithium metal battery (LMB) reveals that they are different in the following points.

In a lithium ion battery (LIB), a host material of a lithium element (lithium ion or lithium metal) which a negative electrode has is filled with a lithium element when the battery is charged and then, the host material releases the lithium element to discharge the battery. LIB has a host material of a lithium element in the negative electrode thereof and is therefore different from the lithium secondary battery 100 of the present embodiment.

A lithium metal battery (LMB) is manufactured using an electrode having a lithium metal on the surface thereof or using a lithium metal alone as a negative electrode. This means that LMB is different from the lithium secondary battery 100 of the present embodiment in that it has a lithium metal, which is a negative electrode active material, in the negative electrode thereof immediately after the assembly of the battery, that is, before initial charge of the battery. LMB is manufactured using an electrode containing a flammable and highly-reactive lithium metal, while the lithium secondary battery 100 of the present embodiment uses a lithium metal-free negative electrode and therefore has more excellent safety and productivity.

The term "the negative electrode does not have a negative electrode active material" as used herein means that the negative electrode 140 does not have or does not substantially have a negative electrode active material. The term "negative electrode 140 does not substantially have a negative electrode active material" means that a content of the negative electrode active material in the negative electrode 140 is 10 mass% or less in the total negative electrode. The content of the negative electrode active material in the negative electrode is preferably 5.0 mass% or less, 1.0 mass% or less, 0.1 mass% or less, or 0.0 mass% or less, in the total negative electrode 140. When the negative electrode 140 does not have a negative electrode active material or a content of the negative electrode active material in the negative electrode 140 is in the aforesaid range, the resulting lithium secondary battery 100 has a high energy density.

The term "before initial charge of the battery" means a state during from the assembly of the battery to the first charge. The term "at the time of completion of discharge" means a state in which the voltage of the battery is 1.0 V or more and 3.8 V or less, preferably 1.0 V or more and 3.0 V or less.

The term "lithium secondary battery equipped with a negative electrode not having a negative electrode active material" as used herein means that the negative electrode 140 does not have a negative electrode active material before initial charge of the battery. Therefore, the term "negative electrode not having a negative electrode active material" may be replaced by "negative electrode not having a negative electrode active material before initial charge of the battery", "negative electrode not having a negative electrode active material other than a lithium metal, not depending on the charge state of the battery and not having a lithium metal before initial charge", "negative electrode current collector not having a lithium metal before initial charge", or the like. The term "lithium secondary battery equipped with a negative electrode not having a negative electrode active material" may be replaced by the term "anode-free secondary battery", "zero-anode secondary battery", or "anode-less secondary battery".

The content of the negative electrode active material other than a lithium metal in the negative electrode 140 of the present embodiment is 10 mass% or less and preferably 5.0 mass% or less in the total negative electrode, not depending on the charge state of the battery. It may be 1.0 mass% or less, 0.1 mass% or less, 0.0 mass% or less, or 0 mass%.

The content of the lithium metal in the negative electrode 140 of the present embodiment before initial charge is 10 mass% or less, preferably 5.0 mass% or less in the total negative electrode. It may be 1.0 mass% or less, 0.1 mass% or less, 0.0 mass% or less, or 0 mass% or less.

In the lithium secondary battery 100 of the present embodiment, the content of the lithium metal in the total negative electrode 140 may be 10 mass% or less (preferably 5.0 mass% or less and it may be 1.0 mass% or less) at a battery voltage of 1.0 V or more and 3.5 V or less; the content of the lithium metal in the total negative electrode 140 may be 10 mass% or less (preferably 5.0 mass% or less and it may be 1.0 mass% or less) at a battery voltage of 1.0 V or more and 3.0 V or less; or the content of the lithium metal in the total negative electrode 140 may be 10 mass% or less (preferably 5.0 mass% or less and it may be 1.0 mass% or less) at a battery voltage of 1.0 V or more and 2.5 V or less.

In the lithium secondary battery 100 of the present embodiment, $M_{3.0}/M_{4.2}$, that is, a ratio of the mass $M_{3.0}$ of the lithium metal which has precipitated on the negative electrode when the voltage of the battery is 3.0 V to the mass $M_{4.2}$ of the lithium metal which has precipitated on the negative electrode when the voltage of the battery is 4.2 V is preferably 40% or less, more preferably 38% or less, and still more preferably 35% or less. The ratio $M_{3.0}/M_{4.2}$ may be 1.0% or more, 2.0% or more, 3.0% or more, or 4.0% or more.

Examples of the negative electrode active material of the present embodiment include lithium metals, alloys containing a lithium metal, carbon-based materials, metal oxides, metals to be alloyed with lithium, and alloys of the aforesaid metals. The carbon-based material is not particularly limited and examples include graphene, graphite, hard carbon, mesoporous carbon, carbon nanotube, and carbon nanohorn. The metal oxide is not particularly limited and examples include titanium oxide-based compounds, tin oxide-based compounds, and cobalt oxide-based compounds. Examples of the metal to be alloyed with lithium include silicon, germanium, tin, lead, aluminum, and gallium.

The negative electrode 140 of the present embodiment is not particularly limited insofar as it does not have a negative electrode active material and is usable as a current collector. Examples include materials composed of at least one selected from the group consisting of Cu, Ni, Ti, Fe, and another metal not reactive with Li, alloys thereof, and stainless steel (SUS). Preferred examples include materials composed of at least one selected from the group consisting of Cu and Ni, alloys thereof, and stainless steel (SUS). Use of such a negative electrode tends to provide a battery having a more excellent energy density and productivity. When SUS is used for a negative electrode, various kinds of conventionally known SUS may be used. One or more of the aforesaid negative electrode materials may be used either singly or in combination. The term "metal unreactive with Li" as used herein means a metal which does not react to alloy with a lithium ion or lithium metal under the operation conditions of a lithium secondary battery.

The average thickness of the negative electrode 140 is preferably 4 μm or more and 20 μm or less, more preferably 5 μm or more and 18 μm or less, and still more preferably 6 μm or more and 15 μm or less. In such a mode, since the occupation volume of the negative electrode 140 in the lithium secondary battery 100 decreases, the lithium secondary battery 100 has a more improved energy density.

(Positive electrode)

The positive electrode 110 contains a positive electrode active material so that the lithium secondary battery 100 has excellent stability and a high output voltage.

The term "positive electrode active material" as used herein means a material for causing an electrode reaction at the positive electrode, in other words, a material causing an oxidation reaction and a reduction reaction. More specific examples of the positive electrode active material of the present embodiment include host materials of a lithium element (typically, lithium ion). Such a positive electrode active material is not particularly limited and examples include metal oxides and metal phosphates. The aforesaid metal oxides are not particularly limited and examples include cobalt oxide-based compounds, manganese oxide-based compounds, and nickel oxide-based compounds. The aforesaid metal phosphates are not particularly limited and examples include iron phosphate-based compounds and cobalt phosphate-based compounds. Examples of typical positive electrode active materials include $LiCoO_2$, $LiNi_xCo_yMn_zO$ (x+y+z=1), $LiNi_xMn_yO$ (x+y=1), $LiNiO_2$, $LiMn_2O_4$, $LiFePO$, $LiCoPO$, $LiFeOF$, $LiNiOF$, and $TiS_2$. One or more of the aforesaid positive electrode active materials may be used either singly or in combination.

The positive electrode 110 contains, in addition to the positive electrode active material, a lithium-containing compound (that is, a sacrificial positive electrode agent) which causes an oxidation reaction and at the same time does not substantially cause a reduction reaction in a charge/discharge potential range of the positive electrode active material. By the initial charge of the lithium secondary battery 100 equipped with such a positive electrode 110, the positive electrode active material and the sacrificial positive electrode agent release a lithium ion and at the same time, cause an oxidation reaction and release an electron to the negative electrode 140 through an external circuit. As a result, the lithium ion derived from the positive electrode active material and the sacrificial positive electrode agent precipitates on the surface of the negative electrode. By the discharge (that is, initial discharge) of the resulting lithium secondary battery 100 after completion of the initial charge, electrolysis and elution of a lithium metal which has precipitated on the surface of the negative electrode occur and the electron transfers from the negative electrode 140 to the positive electrode 110 through the external circuit. Then, the positive electrode active material receives the lithium ion and at the same time, causes a reduction reaction, while the sacrificial positive electrode agent does not substantially cause a reduction reaction in a range of the discharge potential of the positive electrode active material and does not substantially return to the state before the oxidation reaction. In other words, the positive electrode 110 has the sacrificial positive electrode agent before initial charge. The term "initial charge" means a first charging step after the battery is assembled.

Accordingly, when the lithium secondary battery 100 is discharged after the initial charge, electrolysis and elution of the lithium metal derived from the positive electrode active material occur from the negative electrode, while most of the lithium metal derived from the sacrificial positive electrode agent remains on the negative electrode and even after completion of the discharge of the battery, some of the lithium metal remains on the negative electrode. The resulting residual lithium metal becomes a scaffold for the precipitation of a further lithium metal on the negative electrode in a charging step following the initial discharge, which facilitates uniform precipitation of the lithium metal on the negative electrode in the charging step after the initial discharge. As a result, the growth of a lithium metal into dendrite form on the negative electrode is suppressed and the resulting lithium secondary battery 100 has an excellent cycle characteristic.

The sacrificial positive electrode agent contained in the positive electrode 110 is a lithium-containing compound which causes an oxidation reaction and at the same time, does not substantially cause a reduction reaction in a charge/discharge potential range of the positive electrode active material. The term "causes an oxidation reaction in a charge/discharge potential range of the positive electrode active material" means that in a charge/discharge potential range of the positive electrode active material, the agent causes an oxidation reaction to release a lithium ion and an electron (also means that the agent is decomposed by an oxidation reaction to release a lithium ion). The term "does not substantially cause a reduction reaction in a charge/discharge potential range of the positive electrode active material" means that in a charge/discharge potential range of the positive electrode active material, it is impossible or substantially impossible for the sacrificial positive electrode agent to cause a reduction reaction and receive a lithium ion and an electron or to produce them by a reduction reaction under the ordinary reaction conditions for those skilled in the art. The term "the ordinary reaction conditions for those skilled in the art" means, for example, conditions under which a lithium secondary battery is discharged. The term "substantially impossible for the sacrificial positive electrode agent to cause a reduction reaction and receive a lithium ion and an electron or to produce them by a reduction reaction" means that it is impossible for 80% or more (for example, 80% or more, 85% or more, 90% or more, 95% or more, 99% or more, or 100%), each % by volume, of the sacrificial positive electrode agent oxidized by charging of the battery to cause a reduction reaction and receive a lithium ion and an electron or to produce them by a reduction reaction. A proportion of the capacity of the sacrificial positive electrode agent in the initial discharge in the capacity of it in the initial charge is 20% or less (for example, 20% or less, 15% or less, 10% or less, 5% or less, 1% or less, or 0%).

The term "charge/discharge potential range of the positive electrode active material" as used herein means a potential range in which the oxidation reaction and reduction reaction of the positive electrode active material contained in the positive electrode 110 are performed. A specific value depends on the kind of the positive electrode active material contained in the positive electrode 110, but it is typically, 2.5 V or more, 2.7 V or more, 3.0 V or more, 3.2 V or more, or 3.5 V or more and 4.5 V or less, 4.4 V or less, 4.3 V or less, 4.2 V or less, 4.1 V or less, or 4.0 V or less, each relative to an $Li^+/Li$ reference electrode. A representative range of the charge/discharge potential range of the positive electrode active material is 3.0 V or more and 4.2 V or less (vs. $Li^+/Li$ reference electrode) and the upper and lower limits may be replaced independently by any of the aforesaid values. The charge/discharge potential range of the positive electrode active material relative to the $Li^+/Li$ reference electrode may be determined referring to the operating voltage range of the lithium secondary battery 100. For example, when the operating voltage of the lithium secondary battery 100 is 3.0 V or more and 4.2 V or less, the charge/discharge potential range of the positive electrode active material relative to the $Li^+/Li$ reference electrode can be estimated at 3.0 V or more and 4.2 V or less. In other words, the sacrificial positive electrode agent may also be called "lithium-containing compound which causes an oxidation reaction and does not substantially cause a reduction reaction in the operating voltage range of a lithium secondary battery".

The sacrificial positive electrode agent is not particularly limited and examples include lithium oxides such as $Li_2O_2$, lithium nitrides such as LisN, lithium sulfide-based solid solutions such as $Li_2S-P_2S_5$, $Li_2S-LiCl$, $Li_2S-LiBr$, and $Li_2S-LiI$, and iron-based lithium oxides such as $Li_{1+x}(Ti_{1-y}Fe_y)_{1-x}O_2$ ($0<x\leq0.25$, $0.4<y\leq0.9$), $Li_{2-x}Ti_{1-z}Fe_zO_{3-y}$ ($0\leq x<2$, $0\leq y\leq1$, $0.05\leq z\leq0.95$), and $Li_5FeO_4$. From the standpoint of more effectively and reliablly exhibiting the effect of the sacrificial positive electrode agent, a lithium-containing compound containing Fe is preferably used, an iron-based lithium oxide is more preferably used, and $Li_5FeO_4$ is still more preferably used. One or more of the sacrificial positive electrode agents as described above may be used either singly or in combination. As the aforesaid sacrificial positive electrode agent, a commercially available one or that produced by a conventionally known method may be used.

As a result of intensive research, the present inventors have found that even when a sacrificial positive electrode agent as disclosed herein is added to the positive electrode of a lithium secondary battery using a negative electrode not having a negative electrode active material, which is different from a conventional lithium ion battery having a negative electrode active material or lithium metal battery using a lithium metal for a negative electrode, the sacrificial positive electrode agent does not always exhibit its effect fully. The present inventors have also found that the sacrificial positive electrode agent contained in the positive electrode 110 remarkably exhibits its effect of improving a cycle characteristic when in the particle size distribution as determined by the laser diffraction·scattering method, it has a particle size $D_{50}$ (S), which corresponds to a cumulative degree at 50%, of 1.0 μm or more and 20 μm or less and has a particle size $D_{95}$ (S), which corresponds to a cumulative degree at 95%, of 1.0 μm or more and 30 μm or less. The reason for it is presumed as follows, but is not limited thereto.

When the particles of the sacrificial positive electrode agent have a particle size $D_{50}$ (which may also be called "particle size $D_{50}$ (S), hereinafter"), which corresponds to a cumulative degree at 50% in the particle size distribution as determined by the laser diffraction·scattering method, of less than 1.0 μm, the interface resistance between the sacrificial positive electrode agent and another component constituting the positive electrode increases, leading to an increase in electric resistance and deterioration in the conductivity of the positive electrode. It is therefore presumed that such a sacrificial positive electrode agent cannot exhibit its function fully and the resulting battery hardly has an improved cycle characteristic.

When the sacrificial positive electrode agent has a particle size $D_{50}$ (S) of more than 20 μm, on the other hand, the sacrificial positive electrode agent is localized in the positive electrode and a lithium metal derived from the sacrificial positive electrode agent precipitates concentrated on the negative electrode portion facing the localized sacrificial positive electrode agent. As a result, the lithium metal on the negative electrode precipitates unevenly, in other words, the lithium metal grows into dendrite form, which is presumed to adversely affect the cycle characteristic of the lithium secondary battery.

In the present embodiment, since the particle size $D_{50}$ (S) of the sacrificial positive electrode agent contained in the positive electrode 110 is 1.0 μm or more and 20 μm or less, the problem as described above does not occur and the sacrificial positive electrode agent exhibits its effect effectively and reliably. Further, since the particle size $D_{95}$ (S), which corresponds to a cumulative degree at 95% in the particle size distribution as determined by the laser diffraction·scattering method, (which may also be called "particle size $D_{95}$ (S) hereinafter) is 1.0 μm or more and 30 μm or less, the particle size distribution of the sacrificial positive electrode agent becomes more uniform and the lithium metal is suppressed from growing into dendrite form. As a result, the aforesaid sacrificial positive electrode agent is presumed to exhibit its effect fully.

The sacrificial positive electrode agent contained in the positive electrode 110 has a particle size $D_{50}$ (S) of 1.0 μm or more and 20 μm or less. The particle size $D_{50}$ (S) of the sacrificial positive electrode agent contained in the positive electrode 110 is preferably 2.0 μm or more, more preferably 3.0 μm or more, still more preferably 5.0 μm or more, and still more preferably 8.0 μm or more. The sacrificial positive electrode agent contained in the positive electrode 110 has a particle size $D_{50}$ (S) of preferably 18 μm or less, more preferably 15 μm or less, still more preferably 14 μm or less, and still more preferably 12 μm or less.

Further, the sacrificial positive electrode agent contained in the positive electrode 110 has a particle size $D_{95}$ (S) of 1.0 μm or more and 30 μm or less. The sacrificial positive electrode agent contained in the positive electrode 110 has a particle size $D_{95}$ (S) of preferably 3.0 μm or more, more preferably 5.0 μm or more, still more preferably 8.0 μm or more, and still more preferably 10.0 μm or more. The sacrificial positive electrode agent contained in the positive electrode 110 has a particle size $D_{95}$ (S) of preferably 29 μm or less, more preferably 28 μm or less, still more preferably 27 μm or less, and still more preferably 26 μm or less.

The aforesaid particle size distribution by the laser diffraction·scattering method can be determined by a known method. For example, it may be determined using a particle size distribution analyzer such as MT3000EX, product of MicrotracBEL Corp. It is to be noted that in the particle size distribution, the term "particle size Dx corresponding to a cumulative degree at X%" means that the proportion of the particles having a particle size Dx or less is X% of all the particles.

The positive electrode 110 may contain a component other than the positive electrode active material and the sacrificial positive electrode agent. Such a component is not particularly limited and examples include known conductive additives, binders, solid electrolytes (polymer electrolytes, gel electrolytes, and inorganic solid electrolytes, typically, polymer electrolytes or gel electrolytes). As the solid electrolyte, for example, a polymer electrolyte or a gel electrolyte described later may be used.

The conductive additive to be contained in the positive electrode 110 is not particularly limited and examples include carbon black, single-wall carbon nanotube (SWCNT), multi-wall carbon nanotube (MWCNT), carbon nanofiber (CF), and acetylene black. The binder is not particularly limited and examples include polyvinylidene fluoride, polytetrafluoroethylene, styrene butadiene rubber, acrylic resins, and polyimide resins. One or more of the conductive additives and binders as described above may be used either singly or in combination. As the gel electrolyte, those described later may be used.

The total content of the positive electrode active material and the sacrificial positive electrode agent in the positive electrode 110 may be, for example, 50 mass% or more and 100 mass% or less in the total mass of the positive electrode 110. The total content of the positive electrode active material and the sacrificial positive electrode agent is preferably 60 mass% or more, more preferably 70 mass% or more, still more preferably 80 mass% or more, and still more preferably 90 mass% or more, each in the total mass of the positive electrode 110. The total content of the positive electrode active material and the sacrificial positive electrode agent is preferably 100 mass% or less, more preferably 99 mass% or less, and still more preferably 98 mass% or less, each in the total mass of the positive electrode 110.

The content of the sacrificial positive electrode agent may be 1.0 mass% or more and 15 mass% or less based on the total mass of the positive electrode 110. The content of the sacrificial positive electrode agent is preferably 1.0 mass% or more, more preferably 2.0 mass% or more, and still more preferably 3.0 mass% or more, each based on the total mass of the positive electrode 110. The content of the sacrificial positive electrode agent is preferably 12 mass% or less and more preferably 10 mass% or less and it may be 8.0 mass% or less, each based on the total mass of the positive electrode 110. In particular, the aforesaid content is effective when the sacrificial positive electrode agent is a Fe-containing compound and is particularly effective when the sacrificial positive electrode agent is a compound containing $Li_5FeO_4$.

The content of the sacrificial positive electrode agent is preferably defined by a proportion of the irreversible capacity of the sacrificial positive electrode agent in a cell capacity of the lithium secondary battery 100. The term "cell capacity of the lithium secondary battery" as used herein means a value obtained by calculating a total amount of the charge capacity of the positive electrode active material and the sacrificial positive electrode agent contained in the positive electrode 110. More specifically, the cell capacity of the lithium secondary battery 100 is obtained by finding, for each of the positive electrode active materials and each of the sacrificial positive electrode agents contained in the positive electrode 110, a product of a charge capacity density (mAh/g), which is determined by charging/discharging a cell using the positive electrode active material or sacrificial positive electrode agent as a positive electrode and a lithium metal foil as a negative electrode at a drive voltage (for example, 3.0 V or more and 4.2 V or less) of the lithium secondary battery 100, and a mass (g) of the positive electrode active material or sacrificial positive electrode agent contained in the positive electrode 110 and then finding a sum of the aforesaid products of all the positive electrode active materials and sacrificial positive electrode agents contained in the positive electrode 110. The term "irreversible capacity of the sacrificial positive electrode agent" is obtained by charging/discharging a cell having the sacrificial positive electrode agent as a positive electrode and a lithium metal foil as a negative electrode at a drive voltage (for example, 3.0 V or more and 4.2 V or less) of the lithium secondary battery 100 and thereby finding an irreversible capacity density A (mAh/g) of each of the sacrificial positive electrode agents which is a difference (A1-A2) between a charge capacity density A1 and a discharge capacity density A2, calculating a product of the irreversible capacity density and the mass (g) contained in the positive electrode 110, and then finding the sum of the aforesaid products of all the sacrificial positive electrode agents contained in the positive electrode 110.

A proportion X of the irreversible capacity of the sacrificial positive electrode agent in the cell capacity of the lithium secondary battery 100 may also be determined in accordance with the following formula (1) as a ratio of the sum of the products of an irreversible capacity density $A_j$ (mAh/g) of each of the sacrificial positive electrode agents and a content $x_j$ (mass %) in the positive electrode 110 to the sum of the products of a charge capacity density $A1_k$ (mAh/g) of each of the positive electrode active materials and each of the sacrificial positive electrode agents and a content $x_k$ (mass%) in the positive electrode.

[Formula 1]

$$X = \frac{\sum_{j=} \text{Sacrificial positive electrode agent } A_j x_j}{\sum_{k=} \text{Positive electrode active material and } A1_k x_k \atop \text{sacrificial positive electrode agent}} \qquad (1)$$

When a theoretical charge capacity density (mAh/g) of each of the positive electrode active materials and each of the sacrificial positive electrode agents and a theoretical irreversible capacity density (mAh/g) of each of the sacrificial positive electrode agents are known, these known values may be used. The charge capacity density, the discharge capacity density, and the content in the positive electrode 110, of each of the positive electrode active materials and each of the sacrificial positive electrode agents, can be measured using a conventionally known method and the charge capacity density and the discharge capacity density may be measured using a method described in Examples. The content of the positive electrode active material and the sacrificial positive electrode agent in the positive electrode 110 can be measured, for example, by X-ray diffraction measurement (XRD).

The content of the sacrificial positive electrode agent is adjusted so that the proportion of the irreversible capacity of the sacrificial positive electrode agent in the cell capacity of the lithium secondary battery 100 is preferably 1.0% or more and 40% or less, more preferably 2.0% or more and 38% or less, and still more preferably 3.0% or more and 35% or less. The proportion of the irreversible capacity of the sacrificial positive electrode agent in the cell capacity of the lithium secondary battery 100 may be 4.0 mass% or more and 33% or less or 8.0% or more and 20% or less. It is presumed that adjustment of the proportion of the irreversible capacity of the sacrificial positive electrode agent in the cell capacity of the lithium secondary battery 100 enables the control of the proportion of a lithium metal, which remains after initial discharge of the lithium secondary battery 100, in the total amount of the lithium metal which has precipitated by the initial charge so that when the proportion of the aforesaid irreversible capacity falls within the aforesaid range, the amount of the residual lithium metal becomes appropriate and the resulting lithium secondary battery 100 has a more excellent cycle characteristic and energy density.

The content of the conductive additive in the total positive electrode 110 may be, for example, 0.5 mass% or more and 30 mass% or less, 1 mass% or more and 20 mass% or less, or 1.5 mass% or more and 10 mass% or less. The content of the binder in the total positive electrode 110 may be, for example, 0.5 mass% or more and 30 mass% or less, 1 mass% or more and 20 mass% or less, or 1.5 mass% or more and 10 mass% or less. The sum of the contents of the solid polymer electrolyte in the total positive electrode 110 may be, for example, 0.5 mass% or more and 30 mass% or less, 1 mass% or more and 20 mass% or less, or 1.5 mass% or more and 10 mass% or less.

(Positive electrode current collector)

The positive electrode 110 has, on one side thereof, a positive electrode current collector 150. The positive electrode current collector 150 is not particularly limited insofar as it is a conductor not reactive with a lithium ion in the battery. Examples of such a positive electrode current collector include aluminum.

The average thickness of the positive electrode current collector 150 is preferably 4 $\mu$m or more and 20 $\mu$m or less, more preferably 5 $\mu$m or more and 18 $\mu$m or less, and still more preferably 6 $\mu$m or more and 15 $\mu$m or less. In such a mode, an occupation volume of the positive electrode current collector 150 in the lithium secondary battery 100 decreases and the resulting lithium secondary battery 100 therefore has a more improved energy density.

(Buffering function layer)

As shown in Fig. 1, the buffering function layer 130 is formed on the surface of the separator 120 facing the negative electrode 140 and the buffering function layer is a fibrous or porous layer having ionic conductivity and electric conductivity. The buffering function layer 130 is fibrous or porous so that it has a solid portion having ionic conductivity and a pore portion (same meaning as "space portion" and this will equally apply hereinafter) composed of spaces between the solid portions. The term "solid portion" in the buffering function layer as used herein embraces a gel portion.

In a conventional lithium secondary battery, the precipitation site of a lithium metal is limited to the surface of a negative electrode and therefore, the precipitation of a lithium metal tends to cause expansion of the battery. The buffering function layer 130 of the lithium secondary battery 100 of the present embodiment has ionic conductivity and it functions to prevent such volume expansion as a buffering layer and also playing a role as an electrolyte which conducts a lithium ion. In other words, the buffering function layer 130 functions as the aforesaid buffering layer while suppressing an increase in internal resistance.

In First Embodiment, the term "a lithium metal precipitates on the negative electrode" means that unless otherwise particularly specified, a lithium metal precipitates on at least one of the surface of the negative electrode, the pore portion of the buffering function layer, and the surface of a solid electrolyte interfacial layer (SEI layer), which will be described later, formed on the surface of the negative electrode. In the lithium secondary battery 100, therefore, the lithium metal may precipitate on the surface of the negative electrode 140 (the interface between the negative electrode and the buffering function layer) or on the inside of the buffering function layer 130 (pore portion of the buffering function layer).

The buffering function layer 130 is not particularly limited insofar as it is fibrous or porous and has ionic conductivity.

A member constituting the buffering function layer is not particularly limited insofar as it can conduct ions and examples of it include polymer electrolytes or gel electrolytes containing an inorganic or organic salt. Gel electrolytes are preferred. The member constituting the buffering function layer preferably contains a high molecule and a lithium salt. Preferred modes of the member constituting the buffering function layer include polymer electrolytes and gel electrolytes. The polymer electrolytes and gel electrolytes each contain a high molecule. An electrolyte which becomes a gel by containing an electrolyte solution or solvent is particularly called "gel electrolyte".

A material constituting the polymer electrolyte or the gel electrolyte is not particularly limited insofar as it is used generally for a lithium secondary battery and a known material can be selected as needed. The high molecule (resin) constituting the polymer electrolyte or gel electrolyte is not particularly limited and examples include resins having an ethylene oxide unit in the main chain and/or side chain, such as polyethylene oxide (PEO), acrylic resins, vinyl resins, ester resins, nylon resins, polyvinylidene fluoride (PVDF), polyacrylonitrile (PAN), polysiloxane, polyphosphazene, poly(methyl methacrylate), polyamide, polyimide, aramid, polylactic acid, polyethylene, polystyrene, polyurethane, polypropylene, polybutylene, polyacetal, polysulfone, and polytetrafluoroethylene. One or more of the aforesaid resins may be used either singly or in combination.

Examples of the salt contained in the polymer electrolyte or gel electrolyte include salts of Li, Na, K, Ca, or Mg. The lithium salt is not particularly limited and examples include LiI, LiCl, LiBr, LiF, $LiBF_4$, $LiPF_6$, $LiAsF_6$, LiSOsCFs, $LiN(SO_2F)_2$, $LiN(SO_2CF_3)_2$, $LiN(SO_2CF_3CF_3)_2$, $LiB(O_2C_2H_4)_2$, $LiB(C_2O_4)_2$, $LiB(O_2C_2H_4)F_2$, $LiB(OCOCF_3)_4$, $LiNO_3$, and $Li_2SO_4$. One or more of the aforesaid salts or lithium salts may be used either singly or in combination.

The content ratio of the lithium salt to the resin in the polymer electrolyte or gel electrolyte may be determined by a ratio ([Li]/[O]) of lithium atoms which the lithium salt has to oxygen atoms which the resin has. The content ratio of the lithium salt to the resin in the polymer electrolyte or gel electrolyte may be adjusted so that the aforesaid ratio ([Li]/[O]) is, for example, 0.02 or more and 0.20 or less, 0.03 or more and 0.15 or less, or 0.04 or more and 0.12 or less.

The polymer electrolyte or gel electrolyte may contain, in addition to the resin and the salt, a solvent which the lithium secondary battery 100 may contain. More specifically, solvents which may be contained in an electrolyte solution which will be described later can be used.

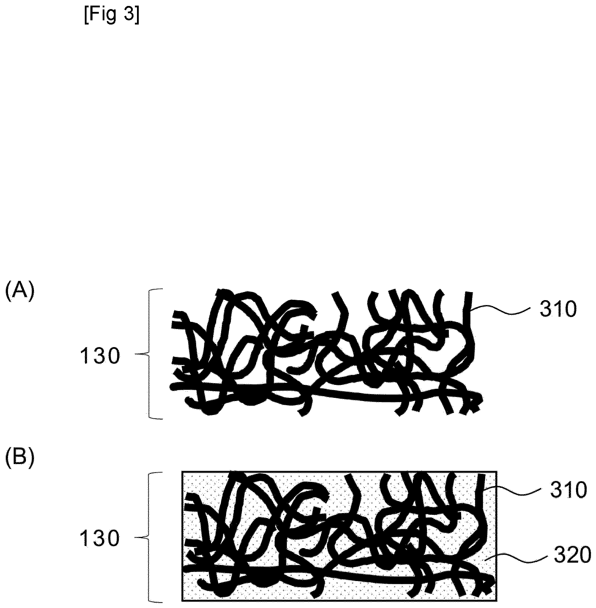

One embodiment of the buffering function layer 130 is a fibrous buffering function layer. Fig. 3(A) is a schematic cross-sectional view of a fibrous buffering function layer. The buffering function layer 130 shown in Fig. 3(A) is composed of an ionically conductive fiber 310 which is a fiber having ionic conductivity. In the present embodiment, the term "the buffering function layer is fibrous" means that the buffering function layer contains a fiber or is composed of a fiber so that it has solid portions and pore portions composed of a space between the solid portions. A lithium metal 320 is presumed to precipitate in the pore portion of the buffering function layer 130 as shown in Fig. 3(B) by charging the lithium secondary battery 100. The precipitation mode of the lithium metal is not limited thereto.

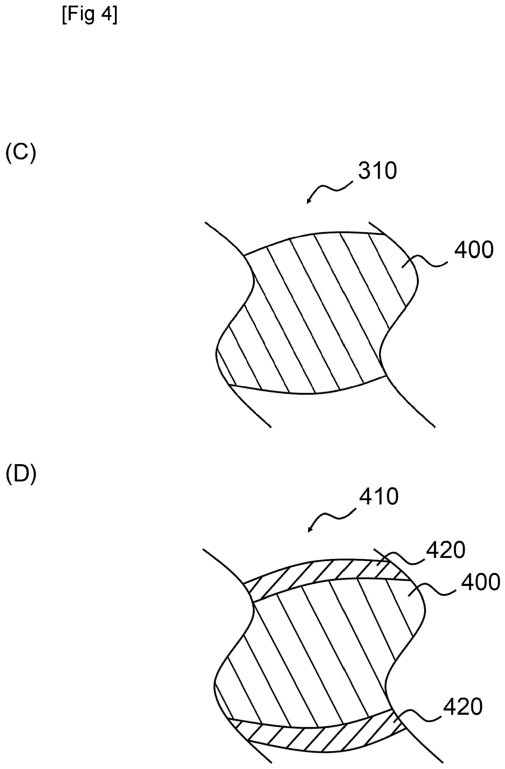

Fig. 4(C) is a schematic cross-sectional view showing one embodiment of the ionically conductive fiber 310. As shown in Fig. 4(C), in one embodiment, the ionically conductive fiber 310 is composed of a fibrous ionically conductive layer 400. The ionically conductive layer 400 is equipped, for example, with the constitution as described above as a member constituting the buffering function layer.

The fibrous ionically conductive layer 400 has an average fiber diameter of preferably 30 nm or more and 5000 nm or less, more preferably 50 nm or more and 2000 nm or less, still more preferably 70 nm or more and 1000 nm or less, and still more preferably 80 nm or more and 500 nm or less. When the average fiber diameter of the ionically conductive layer falls within the aforesaid range, the surface area of a reaction site on which a lithium metal precipitates is in a more appropriate range and the resulting lithium secondary battery therefore tends to have a more improved cycle characteristic.

In another embodiment, the buffering function layer 130 of the lithium secondary battery 100 shown in Fig. 3 may be porous. The porous buffering function layer may be equipped with, for example, a porous ionically conductive layer, particularly, an ionically conductive layer having a continuous pore.

The buffering function layer is fibrous or porous so that it has pores. The porosity of the buffering function layer is not particularly limited and it is preferably 50% or more, more preferably 60% or more, still more preferably 70% or more, and still more preferably 80% or more, in terms of vol %. When the buffering function layer has a porosity in the aforesaid range, the surface area of a reaction site where the lithium metal can precipitate shows a further increase so that the resulting lithium secondary battery has a more improved cycle characteristic. Such a mode tends to exhibit an effect of suppressing the cell volume expansion more effectively and reliably. The porosity of the buffering function layer is not particularly limited and it may be 99% or less or 95% or less in terms of vol.%

The average thickness of the buffering function layer is preferably 100 $\mu$m or less, more preferably 50 $\mu$m or less, and still more preferably 30 $\mu$m or less. When the buffering function layer has an average thickness in the aforesaid range, an occupation volume of the buffering function layer 130 in the lithium secondary battery 100 decreases and the resulting battery has a more improved energy density. In addition, the average thickness of the buffering function layer is preferably 1 $\mu$m or more, more preferably 4 $\mu$m or more, and still more preferably 7 $\mu$m or more. When the buffering function layer has an average thickness in the aforesaid range, the surface area of a reaction site on which a lithium metal can precipitate shows a further increase so that the resulting battery tends to have a more improved cycle characteristic. Such a mode tends to exhibit an effect of suppressing the cell volume expansion more effectively and reliably.

The fiber diameter of the fibrous ionically conductive layer, the porosity of the buffering function layer, and the thickness of the buffering function layer can be measured by known measurement methods. For example, the thickness of the buffering function layer can be measured by etching the surface of the buffering function layer by focused ion beam (FIB) to expose the section thereof and observing the thickness of the buffering function layer at the exposed section by SEM or TEM.

The fiber diameter of the fibrous ionically conductive layer and the porosity of the buffering function layer can be measured by observing the surface of the buffering function layer by a transmission electron microscope. The porosity of the buffering function layer may be calculated by subjecting the observed image of the surface of the buffering function layer to binary analysis with an image analysis software and finding an occupation proportion of the buffering function layer in the total area of the image.

The aforesaid measurement values are each calculated by finding the average of the values measured three times or more, preferably 10 times or more.

When the buffering function layer contains a metal reactive with lithium, the total volume of the negative electrode 140 and the buffering function layer 130 is sufficiently small relative to the volume of the positive electrode 110 and for example, it may be 20% or less, 15% or less, 10% or less, or 5% or less. The volume of each of the positive electrode 110, the negative electrode 140, and the buffering function layer 130 can be measured by a conventionally known method.

(Separator)

The separator 120 is a member for separating the positive electrode 110 from the negative electrode 140 to prevent a short circuit of the battery and in addition, for securing the ionic conductivity of a lithium ion which serves as a charge carrier between the positive electrode 110 and the negative electrode 140. In other words, the separator 120 has a function of separating the positive electrode 110 from the negative electrode 140 and a function of securing the ionic conductivity of a lithium ion. As such a separator, a member having the aforesaid two functions may be used singly or two or more members having the aforesaid one function may be used in combination. As the separator, a member is not particularly limited insofar as it has the aforesaid function and examples include porous members having insulation properties, polymer electrolytes, and gel electrolytes.

When the separator contains a porous member having insulation properties, the pores of such a member are filled with a material having ionic conductivity and such a member therefore exhibits ionic conductivity. Examples of the material to fill the pores therewith include electrolyte solutions, polymer electrolytes, and gel electrolytes, which will be described later.

For the separator 120, one of the porous members having insulation properties, polymer electrolytes, and gel electrolytes may be used singly or two or more of them may be used in combination. When the porous member having insulation properties is used singly as the separator 120, the lithium secondary battery 100 is required to have an electrolyte solution further.

A material constituting the porous member having insulation properties is not particularly limited and examples include insulative high molecular materials. Specific examples include polyethylene (PE) and polypropylene (PP). This means that the separator 120 may be a porous polyethylene (PE) film or a porous polypropylene (PP) film, or a stacked structure thereof.

As the polymer electrolyte or gel electrolyte in the separator 120, those described above in the column of the ionically conductive layer of the buffering function layer may be used, which will equally apply to the high molecule, salt, and another component which may be contained in the polymer electrolyte or gel electrolyte.

The separator 120 may be covered with a separator cover layer. The separator cover layer may cover both of the surfaces of the separator 120 or may cover only one of them. The separator cover layer is not particularly limited insofar as it is a member unreactive to a lithium ion and is preferably capable of firmly bonding the separator 120 to a layer adjacent to the separator 120. Such a separator cover layer is not particularly limited and examples include members containing a binder such as polyvinylidene fluoride (PVDF), a composite material (SBR-CMC) of styrene butadiene rubber and carboxymethyl cellulose, polyacrylic acid (PAA), lithium polyacrylate (Li-PAA), polyimide (PI), polyamideimide (PAI), or aramid. The separator cover layer may be a member obtained by adding, to the aforesaid binder, inorganic particles such as silica, alumina, titania, zirconia, magnesium oxide, magnesium hydroxide, or lithium nitrate.

The average thickness of the separator 120 is preferably 20 $\mu$m or less, more preferably 18 $\mu$m or less, and still more preferably 15 $\mu$m or less. In such a mode, the occupation volume of the separator 120 in the lithium secondary battery 100 decreases and therefore, the resulting lithium secondary battery 100 has a more improved energy density. The average thickness of the separator 120 is preferably 5 $\mu$m or more, more preferably 7 $\mu$m or more, and still more preferably 10 $\mu$m or more. In such a mode, the positive electrode 110 can be separated from the negative electrode 140 more reliably and the short circuit of the battery can be prevented further.

(Electrolyte solution)

The lithium secondary battery 100 preferably has an electrolyte solution. The separator 120 may be wetted with the electrolyte solution or the lithium secondary battery 100 encapsulated together with the electrolyte solution may be used as a finished product. The electrolyte solution contains an electrolyte and a solvent. It is a solution having ionic conductivity and serves as a conductive path of a lithium ion. The lithium secondary battery 100 having the electrolyte solution therefore has a more reduced internal resistance and a more improved energy density, capacity, and cycle characteristic.

The electrolyte is not particularly limited insofar as it is a salt and examples include salts of Li, Na, K, Ca, or Mg. As the electrolyte, a lithium salt is preferred. The lithium salt is not particularly limited and examples include LiI, LiCl, LiBr, LiF, $LiBF_4$, $LiPF_6$, $LiAsF_6$, $LiSOsCFs$, $LiN(SO_2F)_2$, $LiN(SO_2CF_3)_2$, $LiN(SO_2CF_3CF_3)_2$, $LiB(O_2C_2H_4)_2$, $LiB(O_2C_2H_4)F_2$, $LiB(OCOCF_3)_4$, $LiNOs$, and $Li_2SO_4$. The lithium salt is preferably $LiN(SO_2F)_2$ from the standpoint of providing a lithium secondary battery 100 having more excellent energy density, capacity, and cycle characteristic. One or more of the aforesaid lithium salts may be used either singly or in combination.

Examples of the solvent include fluorinated solvents and fluorine-free solvents. The fluorinated solvents are not particularly limited and examples include 1,1,2,2-tetrafluoroethyl-2,2,3,3-tetrafluoropropyl ether, 1,1 2,2-tetrafluoro-ethyl-2,2,2-trifluoroethyl ether, and 1H,1H,5H-octafluoropentyl-1,1,2,2-tetrafluoroethyl ether.

The aforesaid fluorine-free solvents are not particularly limited and examples include ethylene glycol dimethyl ether, triethylene glycol dimethyl ether, tetraethylene glycol dimethyl ether, 1,2-dimethoxyethane, dimethoxyethane, dimethoxypropane, dimethoxybutane, diethylene glycol dimethyl ether, acetonitrile, dimethyl carbonate, diethyl carbonate, ethyl methyl carbonate, ethylene carbonate, propylene carbonate, chloroethylene carbonate, methyl acetate, ethyl acetate, propyl acetate, methyl propionate, ethyl propionate, trimethyl phosphate, triethyl phosphate, and 12-crown-4.

One or two or more of the aforesaid fluorinated solvents and the fluorine-free solvents may be used either singly or in combination at any ratio. The proportion of the content of the fluorinated solvent or the fluorine-free solvent is not particularly limited and, for example, the proportion of the fluorinated solvent in the total volume of the solvent may be 0 to 100 vol% and the proportion of the fluorine-free solvent in the total volume of the solvent may be 0 to 100 vol.%.

(Use of a lithium secondary battery)

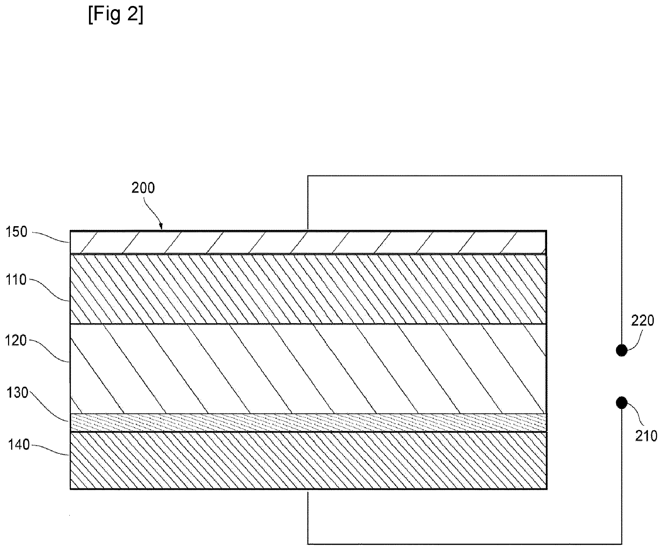

Fig. 2 shows one mode of the use of the lithium secondary battery of the present embodiment. The lithium secondary battery 200 has a positive electrode terminal 220 and a negative electrode terminal 210 for connecting the lithium secondary battery 200 to an external circuit and these terminals are bonded to a positive electrode current collector 150 and the negative electrode 140, respectively. The lithium secondary battery 200 is charged/discharged by connecting the negative electrode terminal 210 to one end of the external circuit and the positive electrode terminal 220 to the other end of the external circuit.

The lithium secondary battery 200 may have a solid electrolyte interfacial layer (SEI layer) at the interface between the buffering function layer 130 and the separator 120 by the initial charge. The lithium secondary battery may not have the SEI layer or may have it at the interface between the negative electrode 140 and the buffering function layer 130. The SEI layer to be formed is not particularly limited and it may contain, for example, a lithium-containing inorganic compound or a lithium-containing organic compound. The typical average thickness of the SEI layer is 1 nm or more and 10 $\mu$m or less.

The lithium secondary battery 200 is charged by applying a voltage between the positive electrode terminal 220 and the negative electrode terminal 210 to cause a current flow from the negative electrode terminal 210 to the positive electrode terminal 220 through the external circuit. When the lithium secondary battery 200 is charged, precipitation of a lithium metal occurs on the surface of the negative electrode. It is to be noted that the precipitation of the lithium metal occurs on at least one of the interface between the negative electrode 140 and the buffering function layer 130, the inside of the buffering function layer 130, and the interface between the buffering function layer 130 and the separator 120.

When the positive electrode terminal 220 and the negative electrode terminal 210 are connected to the charged lithium secondary battery 200, the lithium secondary battery 200 is discharged. This discharge causes electrolysis and elution of the precipitated lithium metal on the surface of the negative electrode.

(Method of manufacturing a lithium secondary battery)

A method of manufacturing the lithium secondary battery 100 as shown in Fig. 1 is not particularly limited insofar as it can provide a lithium secondary battery equipped with the aforesaid constitution and examples of the method include the method as follows.

The positive electrode 110 is formed on the positive elective current collector 150, for example, in the following manner. In addition to the aforesaid positive electrode active material and sacrificial positive electrode agent, a known conductive additive, a solid electrolyte, and a known binder, which are optionally selected, are mixed to obtain a positive electrode mixture. The mixing ratio of them may be adjusted as needed so that the respective contents of the positive electrode active material, sacrificial positive electrode agent, conductive additive, solid electrolyte, and binder fall in the aforesaid range. The proportion of the irreversible capacity of the sacrificial positive electrode agent in the cell capacity of the lithium secondary battery 100 can be controlled only by measuring the charge capacity density of the positive electrode active material and the irreversible capacity density of the sacrificial positive electrode agent in advance and adjusting the mixing ratio, by mass, of the positive electrode active material and the sacrificial positive electrode agent. The positive electrode mixture thus obtained is applied to one of the surfaces of a metal foil (for example, Al foil) serving as a positive electrode current collector and having a predetermined thickness (for example, 5 $\mu$m or more and 1 mm or less), followed by press molding. The molded product thus obtained is punched into a predetermined size to obtain a positive electrode 110.

The particle size of the sacrificial positive electrode agent can be controlled by a known method. Examples of such a method include that using a grinder such as blade mill, jet mill, or ball mill. The particle size $D_{50}$ (S) and the particle size $D_{95}$ (S) can be made smaller by increasing the grinding time with a grinder. From the standpoint of easy control of the particle size, a jet mill is preferably used as a grinder.

Next, a separator 120 having the aforesaid constitution is prepared. As the separator 120, that manufactured by a conventionally known method or a commercially available one may be used.

Next, the aforesaid negative electrode material, for example, a metal foil (such as an electrolytic Cu foil) having a thickness of 1 $\mu$m or more and 1 mm or less is washed with a sulfamic-acid-containing solvent, punched into a predetermined size, ultrasonically washed with ethanol, and then dried to obtain a negative electrode 140.

The method of manufacturing the aforesaid buffering functional layer 130 is not particularly limited insofar as it can provide a fibrous or porous layer having ionic conductivity. The layer may be manufactured, for example, as follows.

A fibrous buffering function layer as shown in Fig. 4(C) and having an ionically conductive fiber 310 composed of a fibrous ionically conductive layer 400 can be manufactured as follows.

First, a solution obtained by dissolving the aforesaid resin (for example, PVDF) in an appropriate organic solvent (for example, N-methylpyrrolidone) is applied with a doctor blade onto the surface of a separator 120 prepared in advance. Then, the separator 120 having the resin solution applied thereto is immersed in a water bath and then dried sufficiently at room temperature to form a fibrous ionically conductive layer on the separator 120 (the ionically conductive layer may be allowed to exhibit its ion conductive function, for example, by pouring an electrolyte solution at the time of assembly of a battery). Thus, a fibrous buffering function layer can be obtained.

The porous buffering function layer equipped with a porous ionically conductive layer can be manufactured as follows.

By using a solution obtained by dissolving the aforesaid resin (for example, PVDF) in an appropriate solvent (for example, N-methylpyrrolidone), a porous ionically conductive layer having a continuous pore is formed on the surface of the separator 120 by a conventionally known method (for example, a method using phase separation from the solvent, a method of using a foaming agent, or the like) (the ionically conductive layer may be allowed to exhibit its ion conductive function, for example, by pouring an electrolyte solution at the time of the assembly of a battery). Thus, a porous buffering function layer can be obtained.

The positive electrode 110, the separator 120 having the buffering function layer 130 formed thereon, and the negative electrode 140, each obtained as described above, are stacked in order of mention so that the buffering function layer 130 faces the negative electrode 140 and thus, a stacked body is obtained. The stacked body thus obtained is encapsulated, together with the electrolyte solution in a hermetically sealing container to obtain a lithium secondary battery 100. The hermetically sealing container is not particularly limited and examples include a laminate film.

[Second Embodiment]

(Lithium secondary battery)

The lithium secondary battery of Second Embodiment is, similar to the lithium secondary battery 100 of First Embodiment, equipped with a positive electrode, a negative electrode not having a negative electrode active material, a separator placed between the positive electrode and the negative electrode, and a buffering function layer formed on the surface of the negative electrode facing the separator. The positive electrode has a positive electrode current collector on the surface opposite to the surface facing the separator.

The respective constitutions and preferred modes of the positive electrode current collector, the positive electrode, the separator, and the negative electrode are similar to those of the lithium secondary battery 100 of First Embodiment except for what will be described later and these constitutions of the lithium secondary battery of Second Embodiment have effects similar to those of the lithium secondary battery of First Embodiment or exhibit a further performance. Similar to the lithium secondary battery 100, the lithium secondary battery of Second Embodiment may contain the electrolyte solution as described above.

(Buffering function layer)

The buffering function layer in the lithium secondary battery of Second Embodiment is fibrous or porous and has ionic conductivity and electric conductivity. This means that in the present embodiment, the buffering function layer is the buffering function layer 130 of First Embodiment further having electric conductivity.

The lithium secondary battery of Second Embodiment has such a buffering function layer so that it has a more excellent cycle characteristic compared with the lithium secondary battery of First Embodiment.

Described specifically, since the buffering function layer of the present embodiment has both ionic conductivity and electric conductivity, the surface and/or inside of the buffering function layer is supplied with electrons from the negative electrode and lithium ions from the separator and/or electrolyte solution when the lithium secondary battery is charged. Since the buffering function layer of the present embodiment is fibrous or porous, it has a solid portion having ionic conductivity and electric conductivity and a pore portion composed of spaces between the solid portions. In the buffering function layer of the present embodiment, therefore, the electrons and lithium ions supplied as described above react on the surface of the aforesaid solid portion, which is inside the buffering function layer, and a lithium metal precipitates in the pore portion (on the surface of the solid portion). As described above, the term "solid portion" in the buffering function layer embraces a gel portion.

In a conventional lithium secondary battery, the precipitation site of a lithium metal is limited to the surface of a negative electrode and therefore, the growth direction of the lithium metal is limited to from the surface of the negative electrode to a separator and the lithium metal tends to grow into dendrite form. In the lithium secondary battery of Second Embodiment equipped with a buffering function layer, on the other hand, a lithium metal precipitates not only on the surface of the negative electrode but also on the surface of the solid portion of the buffering function layer, leading to an increase in the surface area of the reaction site of a lithium metal precipitation reaction, as described above. As a result, it is presumed that in the lithium secondary battery of Second Embodiment, the reaction rate of the lithium metal precipitation reaction is controlled mildly and anisotropic growth of a lithium metal, that is, formation of a lithium metal which has grown into dendrite form is suppressed more reliably. The present inventors have found that when a buffering function layer having both ionic conductivity and electric conductivity is introduced in a lithium secondary battery which has a positive electrode containing a sacrificial positive electrode agent, the sacrificial positive electrode agent exhibits its effects more remarkably. This is presumed to occur because during initial charge, a lithium metal precipitates uniformly in a plane direction on the surface of the solid portion and the surface of the negative electrode and it serves a scaffold for lithium metal precipitation in the subsequent charging so that growth of the lithium metal into dendrite form is suppressed. The factor is however not limited to the aforesaid one.

In Second Embodiment, the term "a lithium metal precipitates on the negative electrode" means that a lithium metal precipitates on at least one of the surface of the negative electrode, the surface of the solid portion of the buffering function layer, and the surface of an SEI layer formed on the surface of the negative electrode and/or the solid portion of buffering function layer, unless otherwise particularly described. In the lithium secondary battery of Second Embodiment, therefore, the lithium metal may precipitate on the surface of the negative electrode (the interface between the negative electrode and the buffering function layer) or on the inside of the buffering function layer (surface of the solid portion of the buffering function layer).

Nonlimiting examples of such a buffering function layer include those obtained by covering all or some of the surface of a fibrous or porous ionically conductive layer with an electrically conductive layer, those obtained by covering all or some of the surface of a fibrous or porous electrically conductive layer with an ionically conductive layer, and those obtained by confounding a fibrous ionically conductive layer and a fibrous electrically conductive layer. As the ionically conductive layer, that similar to the ionically conductive layer 400 which the buffering function layer 130 of First Embodiment may have.

The electrically conductive layer is not particularly limited insofar as it is capable of conducting electrons and examples include a metal film. Nonlimiting examples of the metal which may be contained in the electrically conductive layer include SUS, Si, Sn, Sb, Al, Ni, Cu, Sn, Bi, Ag, Au, Pt, Pb, Zn, In, Bi-Sn, and In-Sn. As the metal to be contained in the electrically conductive layer is preferably Si, Sn, Zn, Bi, Ag, In, Pb, Sb, or Al from the standpoint of enhancing affinity with the lithium metal. One or more of the aforesaid metals may be used either singly or in combination.

One embodiment of the buffering function layer of Second Embodiment is a fibrous buffering function layer similar to that of the mode described referring to Fig. 3 as one embodiment of the buffering function layer of First Embodiment. For example, similar to Fig. 3(B), a lithium metal may precipitate in the pore portion of the buffering function layer. Such a fibrous buffering function layer may be composed of, for example, an ionically and electrically conductive fiber 410, which is a fiber having ionic conductivity and electric conductivity.

One embodiment of such an ionically and electrically conductive fiber 410 is shown in the schematic cross-sectional view of Fig. 4(D). As shown in Fig. 4(D), in one embodiment, the ionically and electrically conductive fiber 410 is equipped with a fibrous ionically conductive layer 400 and an electrically conductive layer 420 which covers the surface of the ionically conductive layer 400. The ionically conductive layer 400 may be equipped with a constitution as described above as the ionically conductive layer and the electrically conductive layer 420 may be equipped with a constitution as described above as the electrically conductive layer.

The average thickness of the electrically conductive layer 420 is preferably 1 nm or more and 300 nm or less, more preferably 5 nm or more and 200 nm or less, and still more preferably 10 nm or more and 150 nm or less. The average thickness of the electrically conductive layer 420 may be 10 nm or more and 100 nm or less. The electrically conductive layer having an average thickness within the aforesaid range can more appropriately keep the electric conductivity of the ionically and electrically conductive fiber and therefore, the resulting battery tends to have a more improved cycle characteristic.

The average thickness and the porosity of the buffering function layer may be similar to those of the buffering function layer 130 of First Embodiment.

The thickness of the electrically conductive layer of Second Embodiment can be measured by a known measurement method or the like. For example, it can be measured by observing the surface of the electrically conductive layer with a transmission electron microscope or by etching the surface of the electrically conductive layer by focused ion beam (FIB) to expose the section thereof and observing the thickness of the buffering function layer at the exposed section by SEM or TEM. The aforesaid measurement values are each calculated by finding the average of the values measured three times or more, preferably 10 times or more.

When the buffering function layer contains a metal reactive with lithium, the total volume of the negative electrode and the buffering function layer may be sufficiently small relative to the volume of the positive electrode, for example, 20% or less, 15% or less, 10% or less, or 5% or less.

(Method of manufacturing a lithium secondary battery)

In the method of manufacturing a lithium secondary battery of Second Embodiment, the manufacture of the components other than the buffering function layer and assembly of the components can be performed in a manner similar to that of the lithium secondary battery of First Embodiment.

The method of manufacturing the aforesaid buffering function layer having an electrically conductive layer is not particularly limited insofar as it can provide a fibrous or porous layer having ionic conductivity and electric conductivity and it may be performed, for example, as follows.

A fibrous buffering function layer having an ionically and electrically conductive fiber 410 equipped with a fibrous ionically conductive layer 400 and an electrically conductive layer 420 which covers the surface of the ionically conductive layer 400, as shown in Fig. 4(D), can be manufactured as follows.

First, as described above, a separator to which a resin solution has been applied is immersed in a water bath and then dried sufficiently at room temperature to form a fibrous ionically conductive layer on the separator (the ionically conductive layer may be allowed to exhibit its ionically conductive function, for example, by pouring an electrolyte solution at the time of assembly of a battery). Then, an appropriate metal (for example, Ni) is deposited under vacuum conditions on the separator having the fibrous ionically conductive layer formed thereon to obtain a fibrous buffering function layer.

The porous buffering function layer equipped with a porous ionically conductive layer and an electrically conductive layer which covers the surface of the ionically conductive layer can also be manufactured as follows.

First, as described above, a porous ionically conductive layer having a continuous pore is formed on the surface of the separator by a conventionally known method (the ionically conductive layer may be allowed to exhibit its ionically conductive function, for example, by pouring an electrolyte solution at the time of the assembly of a battery). Then, by depositing an appropriate metal (for example, Ni), under vacuum conditions, on the separator having the porous ionically conductive layer formed thereon, a porous buffering function layer can be obtained.

[Third Embodiment]

(Lithium secondary battery)

The lithium secondary battery of Third Embodiment is, similar to the lithium secondary battery 100, equipped with a positive electrode, a negative electrode not having a negative electrode active material, a separator placed between the positive electrode and the negative electrode, and a buffering function layer formed on the surface of the negative electrode facing the separator. The positive electrode has a positive electrode current collector on the surface thereof opposite to the surface facing the separator.

The respective constitutions and preferred modes of the positive electrode current collector, the positive electrode, the separator, the buffering function layer, and the negative electrode are similar to those of the lithium secondary battery 100 of First Embodiment except for what will be described later. These constitutions of the lithium secondary battery of Third Embodiment exhibit effects similar to those of the lithium secondary battery 100 or exhibit a more excellent performance. The lithium secondary battery of Third Embodiment may, similar to the lithium secondary battery 100, contain an electrolyte solution as described above.

The positive electrode of the lithium secondary battery of Third Embodiment contains, similar to the aforesaid lithium secondary battery 100, contains a positive electrode active material and also a lithium-containing compound (sacrificial positive electrode agent) which causes an oxidation reaction and does not substantially cause a reduction reaction in a charge/discharge potential range of the positive electrode active material. The respective definitions, examples, and preferred modes of the positive electrode active material, sacrificial positive electrode agent, and another component which the positive electrode may contain are similar to those of First Embodiment.

As a result of an intensive research, the present inventors have found that supposing that $D_{50}$ (A) represents a particle size corresponding to a cumulative degree at 50% in the particle size distribution as determined by the laser diffraction·scattering method, when $D_{50}$ (A) of the positive electrode active material is 5.0 $\mu$m or more and 20 $\mu$m or less and $D_{50}$ (A)/$D_{50}$ (S) which is a particle size ratio of $D_{50}$ (A) of the positive electrode active material to $D_{50}$ (S) of the lithium-containing compound is 2.0 or more and 10.0 or less, the resulting battery has a particularly excellent rate characteristic. The reason for it is presumed as follows, but is not limited thereto.

Since the lithium secondary battery of Third Embodiment is controlled precisely so that the $D_{50}$ (A) of the positive electrode active material is 5.0 $\mu$m or more and 20 $\mu$m or less and the particle size ratio $D_{50}$ (A)/$D_{50}$ (S) is 2.0 or more and 10.0 or less, the contact area between the positive electrode active materials is kept sufficiently large and at the same time, the filling density of the positive electrode increases. Described specifically, the positive electrode of the lithium secondary battery of Third Embodiment is presumed to contain positive electrode active materials which are in sufficient contact each other so as to reduce the internal resistance of the positive electrode and a sacrificial positive electrode agent present to fill the spaces between the positive electrode active materials. Such a positive electrode has an increased energy density and a reduced internal resistance. As a result, the lithium secondary battery of Third Embodiment is presumed to have a high energy density and an excellent rate characteristic.

The term "rate characteristic" as used herein means a performance capable of charging/discharging at a large current and the rate performance is known to be excellent when a battery has a low internal resistance. More specifically, the term "rate characteristic" means that a discharge capacity at a high-rate (for example, 3C) discharge is kept sufficiently high compared with a discharge capacity at a low rate (for example, 0.1C) discharge. The term "having an excellent rate characteristic" as used herein means that for example, a discharge capacity at 3C discharge is 60% or more, 65% or more, or 70% or more compared with a discharge capacity at 0.1 C discharge.

In the lithium secondary battery of Third Embodiment, the particle size $D_{50}$ (A) of the positive electrode active material contained in the positive electrode is 5.0 $\mu$m or more and 20 $\mu$m or less. The particle size $D_{50}$ (A) of the positive electrode active material contained in the positive electrode of the present embodiment is preferably 6.0 $\mu$m or more, more preferably 7.0 $\mu$m or more, still more preferably 8.0 $\mu$m or more, and still more preferably 9.0 $\mu$m or more. The particle size $D_{50}$ (A) of the positive electrode active material contained in the positive electrode of the present embodiment is preferably 19 $\mu$m or less, more preferably 18 $\mu$m or less, still more preferably 17 $\mu$m or less, and still more preferably 15 $\mu$m or less.

Further, in the lithium secondary battery of Third Embodiment, $D_{50}$ (A)/$D_{50}$ (S), that is, a particle size ratio of $D_{50}$ (A) of the positive electrode active material to $D_{50}$ (S) of the sacrificial positive electrode agent is 2.0 or more and 10.0 or less. The particle size ratio $D_{50}$ (A)/$D_{50}$ (S) is preferably 2.5 or more, more preferably 3.0 or more, still more preferably 3.5 or more, and still more preferably 4.0 or more. The particle size ratio $D_{50}$ (A)/$D_{50}$ (S) is preferably 9.5 or less, more preferably 9.0 or less, still more preferably 8.5 or less, and still more preferably 8.0 or less.

In the lithium secondary battery of Third Embodiment, the particle size $D_{50}$ (S) of the sacrificial positive electrode agent contained in the positive electrode is, for example, 0.5 $\mu$m or more and 10 $\mu$m or less. The particle size $D_{50}$ (S)

of the sacrificial positive electrode agent contained in the positive electrode of the present embodiment may be 1.0 $\mu$m or more, 1.5 $\mu$m or more, or 2.0 $\mu$m or more. The particle size $D_{50}$ (S) of the sacrificial positive electrode agent contained in the positive electrode of the present embodiment may be 9.0 $\mu$m or less, 8.0 $\mu$m or less, 7.0 $\mu$m or less, or 6.0 $\mu$m or less. In the present embodiment, by controlling the particle size $D_{50}$ (S) of the sacrificial positive electrode agent to fall within the aforesaid range, the battery thus obtained tends to have a more improved cycle characteristic.

In the lithium secondary battery of Third Embodiment, the electrode density of the positive electrode is, for example, 3.0 g/cc or more. In the present embodiment, the electrode density of the positive electrode may be 3.2 g/cc or more, 3.3 g/cc or more, 3.4 g/cc or more, or 3.5 g/cc or more. In the present embodiment, by controlling the electrode density of the positive electrode to fall within the aforesaid range, the positive electrode has an increased filling density and therefore, the battery thus obtained tends to have a more improved energy density.

In the present embodiment, the term "electrode density" means a mass contained in the unit volume of an electrode. As the unit of it, therefore, g/cc, g/cm$^3$, g/mL, or the like is used. The electrode density depends on the density, arrangement, or the like of a material constituting the electrode. In the positive electrode of the present embodiment, it therefore varies with the particle size of the positive electrode active material and the sacrificial positive electrode agent. In the present embodiment, with an increase in the particle size ratio $D_{50}$ (A)/$D_{50}$ (S), the positive electrode tends to have a higher electrode density. The electrode density may be controlled by adjusting a volume ratio of the contents of the sacrificial positive electrode agent and the positive electrode active material. With an increase in electrode density, the capacity per volume of the lithium secondary battery increases so that the lithium secondary battery tends to have a larger energy density.

In the present embodiment, the respective contents of the positive electrode active material, sacrificial positive electrode agent, and another component which the positive electrode may contain are similar to those of First Embodiment. In the case where $D_{50}$ (A) of the positive electrode active material is 5.0 $\mu$m or more and 20 $\mu$m or less and $D_{50}$ (A)/$D_{50}$ (S), that is, a particle size ratio of $D_{50}$ (A) of the positive electrode active material to $D_{50}$ (S) of the lithium-containing compound is 2.0 or more and 10.0 or less, when the respective contents of the sacrificial positive electrode agent and the positive electrode active material are within the aforesaid range, the positive electrode has a more improved filling density and is therefore preferred.

(Method of manufacturing a lithium secondary battery)

The lithium secondary battery of Third Embodiment can be manufactured in a manner similar to that of the lithium secondary battery of First Embodiment. Control of the respective particle sizes of the positive electrode active material and the sacrificial positive electrode agent is performed in a manner similar to that of the method of manufacturing the lithium secondary battery of First Embodiment and it can be performed with a grinder.

[Modification Example]

The aforesaid embodiments are examples for describing the present invention. They do not intend to limit the present invention only thereto and the present invention may have various modifications without departing from the gist thereof.

For example, the lithium secondary battery of Third Embodiment is equipped with the buffering function layer of First Embodiment but it may be equipped with, as a buffering function layer, the buffering function layer of Second Embodiment. Such a mode can provide a battery having both the excellent rate characteristic of the lithium secondary battery of Third Embodiment and the more excellent cycle characteristic of the lithium secondary battery of Second Embodiment.

In the lithium secondary battery of the present embodiment, the negative electrode may or may not have, on the surface thereof, a current collector to be placed in contact with the negative electrode. Such a current collector is not particularly limited and examples include those which can be used for a negative electrode material. The lithium secondary battery of the present embodiment may not have a positive electrode current collector. When the lithium secondary battery has neither a positive electrode current collector nor a negative electrode current collector, the positive electrode and the negative electrode each serve as a current collector.

In the lithium secondary battery of the present embodiment, a terminal may be attached to the positive electrode current collector and/or negative electrode for connecting it (them) to an external circuit. For example, a metal terminal (for example, Al or Ni) having a length of 10 $\mu$m or more and 1 mm or less may be bonded to one or both of the positive electrode current collector and the negative electrode. As a bonding method, a conventionally known method may be used and for example, ultrasonic welding may be used.

The term "an energy density is high" or "has a high energy density" as used herein means that the capacity of a battery per total volume or total mass is high. It is preferably 700 Wh/L or more or 300 Wh/kg or more, more preferably 800 Wh/L or more or 350 Wh/kg or more, still more preferably 900 Wh/L or more or 400 Wh/kg or more.

The term "having an excellent cycle characteristic" as used herein means that a decreasing ratio of the capacity of a battery is small before and after the expected number of charging/discharging cycles in ordinary use. Described specifically, it means that when a first discharge capacity after the initial charging/discharging and a capacity after the number of charging/discharging cycles expected in ordinary use are compared, the capacity after charging/discharging cycles has hardly decreased compared with the first discharge capacity after the initial charging/discharging. The "number expected in ordinary use" varies depending on the usage of the lithium secondary battery and it is, for example, 30 times, 50 times, 70 times, 100 times, 300 times, or 500 times. The term "capacity after charging/discharging cycles has hardly decreased compared with the first discharge capacity after the initial charging/discharging" means, though differing depending on the usage of the lithium secondary battery, that the capacity after charging/discharging cycles is, for example, 60% or more, 65% or more, 70% or more, 75% or more, 80% or more, or 85% or more, each in the first discharge capacity after the initial charging/discharging.

The numerical range described as the preferred range in the present specification may be replaced by a numerical range obtained by using the described upper limit and lower limit in any combination. For example, when a certain parameter is preferably 50 or more and more preferably 60 or more and preferably 100 or less and more preferably 90 or less, the parameter may be any of 50 or more and 100 or less, 50 or more and 90 or less, 60 or more and 100 or less, or 60 or more and 90 or less.

The ionically conductive layer and the electrically conductive layer described herein are not limited to a layer form and it may be fibrous, massive, or porous. Accordingly, the ionically conductive layer and the electrically conductive layer may also be called "ionically conductive phase" and "electrically conductive phase", respectively.

[Examples]

The present invention will next be described in further detail by Examples and Comparative Examples. The present invention is not limited by the following Examples.

[Manufacture of a lithium secondary battery]

Respective steps in the manufacture of a lithium secondary battery were performed as follows.

(Formation of a negative electrode)

A negative electrode was obtained by washing a 10-$\mu$m electrolytic Cu foil with a solvent containing sulfamic acid, punching the resulting foil into a predetermined size, ultrasonically washing it with ethanol, and then drying it.

(Preparation of a separator)

As a separator, that obtained by coating 2-$\mu$m polyvinylidene fluoride (PVDF) on both sides of a 12-$\mu$m poly-ethylene microporous film and having a predetermined size was prepared.

(Formation of a positive electrode)

A mixture (96 parts by mass) of a positive electrode active material and a sacrificial positive electrode agent, 2 parts by mass of carbon black as a conductive additive, and 2 parts by mass of polyvinylidene fluoride (PVDF) as a binder was applied onto one side of a 12-$\mu$m Al foil serving as a positive electrode current collector, followed by pressing molding. The molded product thus obtained was punched into a predetermined size by punching to obtain a positive electrode.

As the positive electrode active material, $LiNi_{0.85}Co_{0.12}Al_{0.03}O_2$ was used. In Test 1 which will be described later, those listed in Table 1 were used as the sacrificial positive electrode agent. In Test 2 which will be described later, $Li_5FeO_4$ was used as the sacrificial positive electrode agent. The irreversible capacity, particle size $D_{50}$ (S), particle size $D_{95}$ (S), and content of each of the sacrificial positive electrode agents used in Tests 1 and 2, and the particle size ratio of $D_{50}$ (A) to $D_{50}$ (S) of the positive electrode active material are listed in Table 1 and Table 3. In each Example, the $D_{50}$ particle size and the $D_{95}$ particle size were measured using MT3000EX of MicrotracBel.

In Test 1, $Li_2O_2$ and LisN were commercially available ones. In Tests 1 and 2, $Li_5FeO_4$ was prepared by the method described in Chem. Mater. 2010, 22, 1263-1270. Described specifically, $LiOH \cdot H_2O$ and $Fe_2O_3$ were ground and mixed and the resulting mixture was calcined for 72 hours under the condition of 800°C in a nitrogen atmosphere to obtain a sacrificial positive electrode agent. The particle size of the positive electrode active material and sacrificial positive electrode agent thus prepared was adjusted by grinding in a jet mill.

The mixing ratio of the positive electrode active material and the sacrificial positive electrode agent was adjusted so that the proportion of the irreversible capacity of the sacrificial positive electrode agent in the cell capacity of the battery was a predetermined value by using a charge capacity density (mAh/g) of the positive electrode active material and the sacrificial positive electrode agent and an irreversible capacity density A (mAh/g) of the sacrificial positive electrode agent, each measured as described below. In Test 1, the mixing ratio of the positive electrode active material and the sacrificial positive electrode agent was adjusted so that a proportion of the irreversible capacity of the sacrificial positive electrode agent in the cell capacity of the battery was a value described as "addition percent (cell capacity ratio %). The content of the sacrificial positive electrode agent in the total positive electrode of Test 1 is described in Table 1 as "addition amount (mass%)". In Test 2, the mixing ratio of the positive electrode active material and the sacrificial positive electrode agent was adjusted so that the irreversible capacity of the sacrificial positive electrode agent in the cell capacity of the battery was 10%. The content of the sacrificial positive electrode agent in the total positive electrode of Test 2 was 3.3 mass%.

In Tests 1 and 2, the total amount of the positive electrode active material and the sacrificial positive electrode agent was adjusted so that the cell capacity of the lithium secondary battery was 60 mAh.

(Measurement of the capacity of a positive electrode material)

The positive electrode active material or sacrificial positive electrode agent, PVDF, the conductive additive, and N-methylpyrrolidone (NMP) were mixed into a slurry and the resulting slurry was applied onto an aluminum foil, followed by drying and pressing. A test cell using a lithium metal as a counter electrode was formed. By charging the test cell to a voltage of 4.2 V with an electric current of 0.2 mAh/cm$^2$ and then discharging to give a voltage of 3.0 V, the charge capacity density (mAh/g) and/or irreversible capacity density A (mAh/g) were determined.

(Formation of a buffering function layer)

A resin solution obtained by dissolving a PVDF resin in N-methylpyrrolidone (NMP) was applied onto a separator with a bar coater. The separator onto which the resin solution was applied was immersed in a water bath and then dried sufficiently at room temperature to form a fibrous and ionically conductive layer on the separator (it is to be noted that the ionically conductive layer exhibits an ionically conductive function by pouring an electrolyte solution (a 4M dimethoxyethane (DME) solution of $LiN(SO_2F)_2$(LFSI) which will be described later at the time of battery assembly).

The average fiber diameter of the fibrous and ionically conductive layer formed on the separator was observed and measured with a scanning electron microscope (SEM) to be 100 nm.

Then, Ni was deposited under vacuum conditions on the separator having a fibrous and ionically conductive layer formed thereon. The Ionically conductive layer deposited with Ni was observed with an SEM equipped with an energy dispersion type X-ray analyzer (EDX). It was confirmed that the Ni was distributed so as to cover the fibrous ionically conductive layer and that a fibrous buffering function layer covered at the surface of the fibrous ionically conductive layer with the electrically conductive layer was obtained.

The section of the buffering function layer prepared using FIB was observed with SEM and the average thickness of the buffering function layer was found to be 10 $\mu$m. As a result of the observation of the buffering function layer with a transmission electron microscope, the average thickness of the thin Ni film, that is, the electrically conductive layer and the porosity of the buffering function layer were found to be 20 nm and 90%, respectively.

(Assembly of a battery)

As an electrolyte solution, a 4M dimethoxyethane (DME) solution of $LiN(SO_2F)_2$(LFSI) was prepared.

Then, a stacked body was obtained by stacking a positive electrode, a separator having a buffering function layer formed thereon, and a negative electrode in order of mention. The stacking was performed by placing the buffering function layer to face the negative electrode. Further, a 100-$\mu$m Al terminal and a 100-$\mu$m Ni terminal were bonded to the positive electrode current collector and the negative electrode, respectively by ultrasonic welding and then the bonded body was inserted into a laminate outer container. Then, the aforesaid electrolyte solution was poured in the outer container. The resulting outer container was hermetically sealed to obtain a lithium secondary battery.

[Test 1]

(Examples 1 to 9)

By using the sacrificial positive electrode agents listed in Table 1, lithium secondary batteries were manufactured by the aforesaid method. It is to be noted that the mixing ratio of a positive electrode active material and the sacrificial positive electrode agent was adjusted so that a proportion of the irreversible capacity of the sacrificial positive electrode agent in the cell capacity of the battery is a value described in Table 1 as "addition ratio (cell capacity ratio %)". More specifically, the content of the sacrificial positive electrode agent in the total positive electrode was adjusted to a value described in Table 1 as "addition amount (mass%)".

(Comparative Example 1)

In a manner similar to that of Example 1 except that a sacrificial positive electrode agent was not used, a lithium secondary battery was obtained.

(Comparative Example 2)

In a manner similar to that of Example 1 except for the use of a sacrificial positive electrode agent having $D_{50}$ (S) of 0.5 $\mu$m, a lithium secondary battery was obtained.

(Comparative Examples 3 to 5)

In a manner similar to that of Example 1 except for the use of a sacrificial positive electrode agent having, as $D_{50}$ (S) and $D_{95}$ (S), values as described in Table 1, a lithium secondary battery was obtained.

(Comparative Example 6)

In a manner similar to that of Example 8 except for the use of a sacrificial positive electrode agent $Li_2O_2$ having, as $D_{50}$ (S) and $D_{95}$ (S), values as described in Table 1, a lithium secondary battery was obtained.

[Evaluation of energy density and cycle characteristic]

The energy density and cycle characteristic of each of the lithium secondary batteries manufactured in Examples and Comparative Examples were evaluated as follows.

After each of the lithium secondary batteries thus manufactured was charged (initial charge) at 0.2 mAh/cm$^2$ to a voltage of 4.2 V, it was discharged (initial discharge) at 0.2 mAh/cm$^2$ to a voltage of 3.0 V. Then, a charging/discharging cycle consisting of charging at 1.0 mAh/cm$^2$ to a voltage of 4.2 V and discharging at 1.0 mAh/cm$^2$ to a voltage of 3.0 V was repeated 99 times at a temperature condition of 25°C. In any of Examples and Comparative Examples, the capacity (initial capacity) determined from the initial charge was 60 mAh. Supposing that the initial charging/discharging cycle is counted as a first cycle, a proportion of a discharge capacity determined from the 100th cycle discharge of the charging/discharging cycle in a discharge capacity determined from the 2nd cycle discharge of the charging/discharging cycle was calculated as a capacity maintaining ratio (%) and was used as an index of a cycle characteristic. This means that the higher the capacity maintaining ratio, the more excellent the cycle characteristic. The capacity maintaining ratio in each example is shown in Table 1.

[Table 1]

| | | Sacrificial positive electrode agent | | | | | | First positive electrode discharge capacity | Capacity maintaining ratio |
|---|---|---|---|---|---|---|---|---|---|
| | | Kind | Irreversible capacity | Addition amount | Addition amount | $D_{50}$ (S) | D95 (S) | | |
| | | - | (mAh/g) | (mass%) | (cell capacity ratio %) | ($\mu$m) | ($\mu$m) | (mAh/g) | (%) |
| Examples | 1 | $Li_5FeO_4$ | 600 | 4 | 12.5 | 1 | 25 | 170 | 40 |
| | 2 | $Li_5FeO_4$ | 600 | 4 | 12.5 | 3 | 25 | 192 | 75 |
| | 3 | $Li_5FeO_4$ | 600 | 1 | 3 | 10 | 25 | 198 | 70 |
| | 4 | $Li_5FeO_4$ | 600 | 4 | 12.5 | 10 | 25 | 192 | 120 |
| | 5 | $Li_5FeO_4$ | 600 | 4 | 12.5 | 20 | 25 | 192 | 78 |
| | 6 | $Li_5FeO_4$ | 600 | 10 | 33.3 | 10 | 25 | 180 | 85 |
| | 7 | $Li_5FeO_4$ | 600 | 4 | 12.5 | 10 | 30 | 192 | 110 |
| | 8 | $Li_2O_2$ | 1100 | 4 | 22.9 | 10 | 25 | 192 | 103 |
| | 9 | $Li_3N$ | 1200 | 4 | 25 | 10 | 25 | 192 | 110 |
| Comparative Examples | 1 | None | - | - | - | - | 25 | 200 | 20 |
| | 2 | $Li_5FeO_4$ | 600 | 4 | 12.5 | 0.5 | 25 | 192 | 35 |
| | 3 | $Li_5FeO_4$ | 600 | 4 | 12.5 | 10 | 50 | 192 | unstable |
| | 4 | $Li_5FeO_4$ | 600 | 4 | 12.5 | 30 | 50 | 192 | unstable |
| | 5 | $Li_5FeO_4$ | 600 | 4 | 12.5 | 10 | 35 | 192 | unstable |
| | 6 | $Li_2O_2$ | 1100 | 4 | 22.9 | 30 | 35 | 192 | unstable |

In the column of "capacity maintaining ratio" in Table 1, the term "unstable" means a state in which a charge/discharge capacity shows excessive fluctuations during measurement of a charge/discharge capacity and the charge/discharge capacity cannot be measured stably.

It is apparent from Table 1 that the batteries obtained in Examples 1 to 9 by adding a sacrificial positive electrode agent whose particle size $D_{50}$ (S) is 1.0 $\mu$m or more and 20 $\mu$m or less and whose particle size $D_{95}$ (S) is 1.0 $\mu$m or more and 30 $\mu$m or less operate stably, have a high capacity maintaining ratio, and have an excellent cycle characteristic compared with those of Comparative Examples 1 to 6 different from the aforesaid batteries.

[Referential Test 1]

As a referential example, a lithium ion battery was manufactured using a negative electrode carrying, as a negative electrode active material, graphite containing 10 mass% Si on a 10-$\mu$m electrolytic Cu foil. A separator, a positive electrode, a buffering function layer, and an electrolyte solution used were similar to those of Test 1. The addition amount and particle size of the sacrificial positive electrode agent were adjusted to be a value as shown in Table 2.

The cycle characteristic of the lithium ion battery manufactured as Referential Example 1 was determined as in Test 1. The results are shown in Table 2.

[Table 2]

| | | Referential Example 1 |
|---|---|---|
| Negative electrode active material | | Si, graphite |
| Sacrificial positive electrode agent | Sacrificial positive electrode material | $Li_5FeO_4$ |
| | Irreversible capacity (mAh/g) | 600 |
| | Addition amount (mass %) | 4.0 |
| | Addition amount (cell capacity ratio %) | 12.5 |
| | D50 (S) ($\mu$m) | 30 |
| | D95 (S) ($\mu$m) | 50 |
| First positive electrode discharge capacity (mAh/g) | | 192 |
| Capacity maintaining ratio (%) | | 60 |

Comparison between Referential Example 1 of Table 2 and Comparative Example 4 of Table 1 has revealed that even if the same positive electrode is used, a lithium ion battery equipped with a negative electrode having a negative electrode active material performs stable charging/discharging cycles, while the lithium secondary battery of the present embodiment equipped with a negative electrode not having a negative electrode active material does not perform stable charging/discharging cycles. This suggests that the lithium secondary battery of the present embodiment requires positive electrode designing different from that of a conventional lithium ion battery equipped with a negative electrode having a negative electrode active material.

[Test 2]

(Examples 10 to 16)

Lithium secondary batteries were manufactured in a manner similar to those of Examples in Test 1 except for the use of positive electrodes having a positive electrode active material and a sacrificial positive electrode agent having the respective properties as described in Table 3. In Test 2, a mixing ratio of the positive electrode active material and the sacrificial positive electrode agent was adjusted so that the proportion of the irreversible capacity of the sacrificial positive electrode agent in the cell capacity of the battery was 10%. The content of the sacrificial positive electrode agent in the total positive electrode in Test 2 was 3.3 mass%.

(Comparative Example 7)

In a manner similar to that of Example 10 except that a sacrificial positive electrode agent was not used, a lithium secondary battery was obtained.

(Comparative Examples 8 to 9)

In a manner similar to that of Example 10 except for the use of a sacrificial positive electrode agent having a particle size $D_{50}$ (S) as shown in Table 3, lithium secondary batteries were obtained.

(Comparative Examples 10 to 11)

In a manner similar to that of Example 12 except for the use of a positive electrode active material and a sacrificial positive electrode agent having a particle size $D_{50}$ (A) and a particle size $D_{50}$ (S) as shown in Table 3, lithium secondary batteries were obtained.

[Evaluation of a rate characteristic]

The rate characteristic of the lithium secondary batteries manufactured in Examples and Comparative Examples was evaluated in the following manner.

After charging each of the resulting lithium secondary batteries at 3.0 mA to 4.2 V, CC discharge was performed in each step at a discharge rate of 0.05 C, 0.1 C, 0.5 C, 1.0 C, 2.0 C, or 3.0 C in order of mention. At that time, the lower-limit voltage was set at 3.0 V. Between discharge and discharge, CC charge was performed at 3.0 mA to 4.2 V again and after completion of the charge, CC discharge was performed at a next discharge rate. A ratio of the discharge capacity at a discharge rate of 3.0 C to the discharge capacity at a discharge rate of 0.1 C, each obtained as described above, was calculated as a rate characteristic (%) and was used as an index of a rate characteristic. When a discharge current is increased, a voltage drop due to an internal resistance increases and a discharge capacity tends to decrease. A lithium second battery having a higher rate characteristic therefore has a more excellent rate characteristic.

[Table 3]

| | Positive electrode active material, particle size $D_0$ (A) | Sacrificial positive electrode, particle size $D_{50}$ (S) | Particle size ratio, $D_{50}$ (A) /D50 (S) | Electrode density | Rate characteristic |
|---|---|---|---|---|---|
| | ($\mu$m) | ($\mu$m) | (-) | (g/cc) | (%) |
| Ex. 10 | 10 | 5 | 2 | 3.4 | 70 |
| Ex. 11 | 10 | 2.5 | 4 | 3.4 | 75 |
| Ex. 12 | 10 | 2 | 5 | 3.5 | 80 |
| Ex. 13 | 10 | 1 | 10 | 3.5 | 78 |
| Ex. 14 | 5 | 1 | 5 | 3.3 | 76 |
| Ex. 15 | 15 | 3 | 5 | 3.7 | 75 |
| Ex. 16 | 20 | 4 | 5 | 3.8 | 73 |
| Comp. Ex. 7 | 10 | - | - | 3.2 | 50 |
| Comp. Ex. 8 | 10 | 10 | 1 | 3.2 | 50 |
| Comp. Ex. 9 | 10 | 0.5 | 20 | 3.6 | 55 |
| Comp. Ex. 10 | 3 | 0.6 | 5 | 2.8 | 55 |
| Comp. Ex. 11 | 25 | 5 | 5 | 3.9 | 58 |

It is apparent from Table 3 that the batteries obtained in Examples 10 to 16 in which the particle size $D_{50}$ (A) of the positive electrode active material is 5.0 $\mu$m and 20 $\mu$m or less and the particle size ratio $D_{50}$ (A)/$D_{50}$ (S) is 2.0 or more and 10.0 or less have a high rate characteristic (%) and an excellent rate characteristic compared with those in Comparative Examples 7 to 11 having a particle size ratio outside the aforesaid range.

Industrial Applicability

The lithium secondary battery of the present invention has a high energy density and an excellent cycle characteristic or rate characteristic so that it has industrial applicability as a power storage device to be used for various applications. Reference Signs List

100, 200    lithium second battery

110    positive Electrode
120    separator
130    buffering function layer
140    negative electrode
150    positive electrode current collector
210    negative electrode terminal
220    positive electrode terminal
310    ionically conductive fiber
320    lithium metal
400    ionically conductive layer
410    ionically and electrically conductive fiber
420    electrically conductive layer

**Claims**

**1.**  A lithium secondary battery, comprising:

a positive electrode,
a negative electrode not having a negative electrode active material,
a separator placed between the positive electrode and the negative electrode, and
a fibrous or porous buffering function layer formed on a surface of the separator facing the negative electrode and having ionic conductivity, wherein:

the positive electrode comprises a positive electrode active material and a lithium-containing compound which causes an oxidation reaction and does not substantially cause a reduction reaction in a charge/discharge potential range of the positive electrode active material, and
in a particle size distribution as measured by a laser diffraction·scattering method,
the lithium-containing compound has a particle size $D_{50}$ (S), which corresponds to a cumulative degree at 50%, of 1.0 $\mu$m or more and 20 $\mu$m or less, and
the lithium-containing compound has a particle size $D_{95}$ (S), which corresponds to a cumulative degree at 95%, of 1.0 $\mu$m or more and 30 $\mu$m or less.

**2.**  A lithium secondary battery, comprising:

a positive electrode,
a negative electrode not having a negative electrode active material,
a separator placed between the positive electrode and the negative electrode, and
a fibrous or porous buffering function layer formed on a surface of the separator facing the negative electrode and having ionic conductivity, wherein:

the positive electrode comprises a positive electrode active material and a lithium-containing compound which causes an oxidation reaction and does not substantially cause a reduction reaction in a charge/discharge potential range of the positive electrode active material,
supposing that in a particle size distribution as determined by a laser diffraction·scattering method, a particle size corresponding to a cumulative degree at 50% is $D_{50}$,
the positive electrode active material has $D_{50}$ (A) of 5.0 $\mu$m or more and 20 $\mu$m or less, and
a particle size ratio $D_{50}$ (A)/$D_{50}$ (S) of $D_{50}$ (A) of the positive electrode active material to $D_{50}$ (S) of the lithium-containing compound is 2.0 or more and 10.0 or less.

3. The lithium secondary battery according to Claim 2, wherein the lithium-containing compound has $D_{50}$ (S) of 1.0 μm or more and 10 μm or less.

4. The lithium secondary battery according to Claim 2 or 3, wherein the positive electrode has an electrode density of 3.0 g/cc or more.

5. The lithium secondary battery according to any one of Claims 1 to 4, comprising 1.0 mass% or more and 15 mass% or less of the lithium-containing compound based on a total mass of the positive electrode.

6. The lithium secondary battery according to any one of Claims 1 to 4, wherein a proportion of an irreversible capacity of the lithium-containing compound in a cell capacity of the lithium secondary battery is 1.0% or more and 30% or less.

7. The lithium secondary battery according to any one of Claims 1 to 6, wherein the buffering function layer has a porosity of 50% or more.

8. The lithium secondary battery according to any one of Claims 1 to 7, wherein the buffering function layer further has electric conductivity.

9. The lithium secondary battery according to any one of Claims 1 to 8, wherein the lithium-containing compound is an Fe-containing compound.

[Fig 1]

100

150

110

120

130

140

[Fig 2]

[Fig 3]

(A)

130

310

(B)

130

310

320

[Fig 4]

(C)

310

400

(D)

410

420

400

420

<table>
<tr><td colspan="2" align="center">**INTERNATIONAL SEARCH REPORT**</td><td>International application No.<br>PCT/JP2021/016226</td></tr>
</table>

| A. CLASSIFICATION OF SUBJECT MATTER |
| --- |
| Int. Cl. H01M4/13(2010.01)i, H01M4/62(2006.01)i, H01M10/0562(2010.01)i, H01M10/058(2010.01)i, H01M50/463(2021.01)i<br>FI: H01M10/058, H01M4/13, H01M4/62 Z, H01M10/0562, H01M50/463 |
| According to International Patent Classification (IPC) or to both national classification and IPC |

| B. FIELDS SEARCHED |
| --- |
| Minimum documentation searched (classification system followed by classification symbols)<br>Int. Cl. H01M4/13, H01M4/62, H01M10/0562, H01M10/058, H01M50/463 |
| Documentation searched other than minimum documentation to the extent that such documents are included in the fields searched<br>Published examined utility model applications of Japan      1922-1996<br>Published unexamined utility model applications of Japan    1971-2021<br>Registered utility model specifications of Japan            1996-2021<br>Published registered utility model applications of Japan    1994-2021 |
| Electronic data base consulted during the international search (name of data base and, where practicable, search terms used) |

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 2019-145299 A (SAMSUNG ELECTRONICS CO., LTD.) 29 August 2019 (2019-08-29), paragraphs [0074], [0122]-[0127] | 1-9 |
| A | JP 2015-519686 A (CALIFORNIA INSTITUTE OF TECHNOLOGY) 09 July 2015 (2015-07-09), claims | 1-9 |
| A | JP 2013-175412 A (SUMITOMO ELECTRIC INDUSTRIES, LTD.) 05 September 2013 (2013-09-05), claims, paragraphs [0032], [0033], [0064] | 1-9 |
| A | JP 2014-143133 A (TOYOTA MOTOR CORP.) 07 August 2014 (2014-08-07), claims | 1-9 |

☒ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>01.07.2021 | Date of mailing of the international search report<br>13.07.2021 |
| --- | --- |
| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

**INTERNATIONAL SEARCH REPORT**

| | International application No. |
|---|---|
| | PCT/JP2021/016226 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2018-185906 A (TOYOTA MOTOR CORP.) 22 November 2018 (2018-11-22), claims | 1-9 |
| A | JP 2019-145401 A (TOYOTA INDUSTRIES CORP.) 29 August 2019 (2019-08-29), claims | 1-9 |

Form PCT/ISA/210 (continuation of second sheet) (January 2015)

**INTERNATIONAL SEARCH REPORT**

Information on patent family members

International application No.

PCT/JP2021/016226

| Patent Documents referred to in the Report | Publication Date | Patent Family | Publication Date |
|---|---|---|---|
| JP 2019-145299 A | 29.08.2019 | US 2019/0260065 A1 paragraphs [0116], [0178]-[0187] KR 10-2019-0100078 A | |
| JP 2015-519686 A | 09.07.2015 | US 2013/0017432 A1 claims WO 2013/154623 A1 KR 10-2014-0048197 A CN 104350631 A | |
| JP 2013-175412 A | 05.09.2013 | (Family: none) | |
| JP 2014-143133 A | 07.08.2014 | US 2015/0325844 A1 claims WO 2014/115604 A1 CN 104937749 A | |
| JP 2018-185906 A | 22.11.2018 | (Family: none) | |
| JP 2019-145401 A | 29.08.2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019517722 W

- JP 2019537226 W

**Non-patent literature cited in the description**

- *Chem. Mater.,* 2010, vol. 22, 1263-1270